# EUROPÄISCHE PATENTSCHRIFT

(11) **EP 1 669 149 B1**
(45) Veröffentlichungstag und Bekanntmachung des Hinweises auf die Patenterteilung: **16.09.2009**
(21) Anmeldenummer: 05024970.5
(22) Anmeldetag: 15.11.2005
(51) Int. Cl.: B23G 7/02, B23G 5/18

(54) **Werkzeug und Verfahren zur Erzeugung eines Gewindes in einem Werkstück**
Tool and method for making a thread in a workpiece
Outil et procédé pour produire un pas de vis dans une pièce

(30) Priorität: 08.12.2004 DE 102004059264
(43) Veröffentlichungstag der Anmeldung: 14.06.2006
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, 91207 Lauf (DE); Hechtle, Dietmar, 91257 Pegnitz (DE)
(74) Vertreter: Schröer, Gernot H.

(56) Entgegenhaltungen:
- EP-A- 1 072 348
- WO-A-20/04094094
- DE-A1- 19 649 190
- LOPUKHOV V P: "METAL-CUTTING TOOLS EXPERIENCE IN USING TAPS WITH CUTTING/BURNISHING TEETH" RUSSIAN ENGINEERING RESEARCH, ALLERTON PRESS, NEW YORK, NY, US, Bd. 19, Nr. 11, 1999, Seiten 73-78, XP001073040 ISSN: 1068-798X

## Beschreibung

Die Erfindung betrifft ein Werkzeug sowie ein Verfahren, jeweils zur Erzeugung eines Gewindes.

Zur Gewindeerzeugung oder Gewindenachbearbeitung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das *Handbuch der Gewindetechnik und Frästechnik, Herausgeber: EMUGE-FRANKEN, Verlag: Pablicis Corporate Publishing, Erscheinungsjahr: 2004 (ISBN 3-89578-232-*7), im Folgenden nur als "EMUGE-Handbuch" bezeichnet.

Unter die spanabhebenden oder spanenden Gewindeerzeugung fallen die Gewindebohrer (vgl. *EMUGE-Handbuch, Kapitel 8, Seiten 181 bis 298)* und die Gewindefräser (vgl. *EMUGE-Handbuch, Kapitel 10, Seiten 325 bis 372)* sowie, nur für Außengewinde, die Schneideisen (vgl. *EMUGE-Handbuch, Kapitel 11, Seiten 373 bis 404).*

Ein Gewindebohrer ist ein axial zu seiner Werkzeugachse arbeitendes Gewindeschneidwerkzeug, dessen Schneiden entlang eines Außengewindes unter der Gewindesteigung des zu erzeugenden Gewindes angeordnet sind. Beim Erzeugen des Gewindes wird der Gewindebohrer mit axialem Vorschub und unter Drehung um seine Werkzeugachse mit von der Vorschubgeschwindigkeit abhängiger Drehgeschwindigkeit in eine Bohrung des Werkstücks bewegt, wobei seine Schneiden permanent mit dem Werkstück an der Wandung der Bohrung in Eingriff sind (kontinuierlicher Schnitt).

Beim Gewindefräser sind mehrere axial zur Werkzeugachse gemäß der Steigung des zu erzeugenden Gewindes versetzt angeordnete, selbst ohne Gewindesteigung verlaufende Profilrillen vorgesehen, die unter Bildung mehrerer Frässchneiden entlang des Umfang durch Nuten unterbrochen sind. Zum Erzeugen des Gewindes wird der Gewindefräser mit seiner Werkzeugachse in einer linearen Vorschubbewegung einerseits und zusätzlich einer Zirkularbewegung um eine Mittelachse des zu erzeugenden Gewindes oder der Vorbohrung im Werkstück andererseits bewegt, wodurch sich eine schraubenförmige Bewegung des Werkzeugs ergibt, deren Steigung der Gewindesteigung des zu erzeugenden Gewindes entspricht. Zusätzlich wird der Gewindefräser um seine eigene Werkzeugachse rotiert, wobei diese Rotationsgeschwindigkeit in weiten Grenzen unabhängig von der Bahngeschwindigkeit der Schraubenbewegung wählbar ist, jedoch üblicherweise deutlich höher als diese gewählt ist. Die Frässchneiden des Gewindefräsers greifen intermittierend nacheinander in das Werkstück ein (unterbrochener Schnitt). Der Gewindefräser ist also ein zirkular arbeitendes Gewindewerkzeug. Ein derartiger Gewindefräser wird in EP 1 072 348 A offenbart.

Unter die spanlosen Gewindeerzeugungswerkzeuge fallen die sogenannten Gewindefurcher (vgl. *EMUGE-Handbuch, Kapitel 9, Seiten 299 bis 324)* und, nur für Außengewinde, die Gewindewalzwerkzeuge (vgl. *EMUGE-Handbuch, Kapitel 11, Seiten 373 bis 404)*

Gewindefurcher sind axial zu ihrer Werkzeugachse arbeitende Gewindewerkzeuge mit einem an einem Werkzeugschaft ausgebildeten Arbeitsbereich, der eine schraubenförmige die Werkzeugachse umlaufende Wirkfläche aufweist, mit der das Gewinde in das Werkstück eingedrückt wird, also mit einem entlang des Umfangs spiral- oder schraubenförmig umlaufenden Außengewinde oder Gewindeprofil, das die Gegenform zu dem zu erzeugenden Gewinde darstellt. In der Regel weist ein Gewindefurcher einen annähernd polygonalen Querschnitt auf, so dass entlang des dann von einer exakt zylindrischen Schraubenlinie abweichenden Außengewindes des Arbeitbereichs zueinander versetzte weiter nach außen ragende und im Allgemeinen abgerundete Polygon-Eckbereiche, die auch als Drückstollen oder Formzähne oder Furchzähne oder Formkeile bezeichnet werden, gebildet sind, die der Gewindesteigung des schraubenförmigen Gewindeprofils folgen. Durch diese Maßnahme werden bei der Umformung die Kontaktflächen und damit die Klemmkräfte verringert. Dabei sind für das Polygon mindestens drei Ecken oder Eckbereiche erforderlich, da sich die Gewindefurcher bei der Gewindeerzeugung am Rand der Bohrung oder dem Gewindeaußenrand abstützen müssen.

Der Außendurchmesser oder der Querschnitt des Arbeitsbereichs eines Gewindefurchers nimmt in einem Anlauf- oder Einlaufbereich, der der eigentliche Formgebungsbereich ist, vom vorderen Ende des Werkzeugs nach hinten, zumeist konisch, zu und bleibt in einem anschließenden Kalibrier- und/oder Führungsbereich im Wesentlichen gleich. Dadurch wird der Gewindegang schrittweise durch die immer tiefer in das Werkstück eindrückenden Furchzähne des Anlaufbereichs erzeugt und durch die in ihrer Eindrücktiefe gleichbleibenden Furchzähne des Kalibrierbereichs gegebenenfalls noch nachgeglättet oder kalibriert.

Zur Erzeugung eines Gewindes in einer bereits vorhandenen Bohrung wird der Gewindefurcher mit dem Arbeitsbereich voran mit einer linearen Vorschubbewegung axial zur Werkzeugachse, d.h. der Längsachse des Werkzeugschafts, und unter Drehung des Werkzeugs um diese Werkzeugachse in die Bohrung eingeführt. Dabei werden die Zähne bzw. Formkeile bzw. Drückstollen des Gewindes am Gewindefurcher in die Oberfläche des Werkstücks bzw. der Bohrung gedrückt. Der Werkstoff des Werkstücks wird dabei vorwiegend radial zur Längsachse der Bohrung weggedrückt. Ein Teil des so verformten Materials wird verfestigt, ein anderer Teil in die Vertiefungen bzw. Rillen zwischen den Formkeilen bzw. Zähnen des Gewindefurchers gedrängt, wodurch schließlich ein Gewinde im Werkstück erzeugt wird.

Diese bekannten Gewindefurcher werden im Folgenden auch als axiale Gewindeformer und das entsprechende Verfahren als axiales Gewindeformen bezeichnet. Bekannte Ausführungsbeispiele solcher (axialen) Gewindefurcher finden sich auch in DE 101 36 293 A1, DE 199 58 827 A1, oder auch in DE 39 34 621 C2.

Aus WO 02/094491 A1 sind ein spanlos arbeitendes Gewindeformwerkzeug und ein Verfahren zur spanlosen Gewindeerzeugung bekannt, die auf einem als Zirkulargewindeformen oder Zirkulargewindefurchen bezeichenbaren Arbeitsprinzip beruhen. Das in WO 02/094491 A1 offenbarte Gewindeformwerkzeug ist langgestreckt und umfasst einen Arbeitsbereich mit einem oder mehreren durch Ringnuten voneinander getrennten ringförmigen Umfangsprofilen(en). Jedes Umfangsprofil ist in seinem Zentrum nichtkreisförmig ausgebildet und weist wenigstens drei Erhebungen nach Art eines Polygons als Drückstollen auf. Zusätzlich können auch axial verlaufende Nuten zwischen den einzelnen Drückstollen an der Außenfläche des Werkzeugs zum Zuführen von Kühlflüssigkeit vorgesehen sein. Dieses Werkzeug wird nun bei dem Verfahren gemäß WO 02/094491 A1 unter Drehung um seine eigene Achse in eine Bohrung mit größerem Durchmesser als das Werkzeug eingeführt und vollführt eine kreisförmige Bewegung entlang des Umfangs der Bohrung sowie zugleich eine Vorschubbewegung in die Bohrung und formt dadurch spanlos das Gewinde in der Bohrung.

Das Gewinde wird gemäß WO 02/094491 A1 also, im Gegensatz zum axialen Gewindefurchen, nicht mittels einer spiralförmigen, der Gewindesteigung angepassten Wirkfläche am Werkzeug und einer nur axialen oder linearen Vorschubbewegung des Werkzeugs relativ zum Werkstück geformt, sondern mittels ringförmiger und steigungsloser und zugleich im Querschnitt polygonaler Wirkflächen am Werkzeug einerseits und einer mit einer Drehung des Werkzeugs um die eigene Längsachse kombinierten schraubenförmigen Bewegung des Werkzeugs, die aus einer linearen Vorschubbewegung axial zur Längsachse des Werkzeugs und einer Zirkularbewegung der Längsachse des Werkzeugs um eine Mittelachse der Bohrung resultiert, andererseits.

Ferner sind ausschließlich spanabhebend arbeitende Kombinationswerkzeuge aus Bohrer und Gewindefräser bekannt, nämlich der sogenannte Bohrgewindefräser (BGF) (vgl. *EMUGE-Handbuch, Kapitel 10, Seite 354)* und der sogenannte Zirkularbohrgewindefräser (ZBGF) ((vgl. *EMUGE-Handbuch, Kapitel 10, Seite 355),* mit denen die Bohrung für das Gewinde und das Gewinde selbst in dem Werkstück erzeugt werden können.

Der Bohrgewindefräser weist vor einem Gewindefräsabschnitt am vorderen Ende ein Bohrteil auf und bohrt mit dem Bohrteil mit zur Werkzeugachse axialem Vorschub und unter Drehung um die Werkzeugachse in das Vollmaterial des Werkstücks eine Bohrung und erzeugt anschließend mit dem Gewindefräser mit einer radialen Zustallung nach außen und einer schraubenförmigen Zurückbewegung zirkular ein Innengewinde in der Bohrung.

Der Zirkulargewindefräser weist ebenfalls axial vor einem Gewindefräser am vorderen Ende ein Bohrteil auf, das aber im Gegensatz zum Bohrgewindefräser in den radialen Abmessungen kleiner sein muss als die Gewindefräszähne. Mit einer einzigen Schraubenbewegung des Zirkulargewindefräsers in das Vollmaterial des Werkstücks unter Drehung um seine Werkzeugachse erzeugt der Zirkulargewindefräser gleichzeitig die Bohrung und das Innengewinde in der Bohrung.

Schließlich sind auch ausschließlich axial arbeitende Kombinationsgewindewerkzeuge aus Gewindebohrer und Gewindefurcher und zugehörige Arbeitsverfahren zum Erzeugen von Innengewinden in vorerzeugten Bohrungen bekannt. Bei diesen Kombinationswerkzeugen sind ein Gewindebohrer und ein Gewindefurcher auf einem Werkzeugschaft entlang der Werkzeugachse axial versetzt hintereinander angeordnet. Bei axialem Vorschub des Kombinationswerkzeugs entlang seiner Werkzeugachse in die vorerzeugte Bohrung im Werkstück und unter Drehung des Werkzeugs um seine Werkzeugachse mit von der Vorschubgeschwindigkeit entsprechend der gewünschten Gewindesteigung abhängiger Rotationsgeschwindigkeit schneidet der Gewindebohrer das Gewinde vor und der Gewindefurcher furcht das vorgeschnittene Gewinde in demselben Arbeitschritt nach. Gewindebohrer und Gewindefurcher sind während der Arbeitsbewegung kontinuierlich in Eingriff mit dem Werkstück. Ein solches axiales Kombinationswerkzeug und Verfahren sind aus DE 70 17 590 U und DE 196 49 190 C2 bekannt.

Gemäß DE 196 49 190 C2 wird das Gewinde zunächst mit dem Gewindebohrer in den Gewindeflanken profil- und maßgenau spanabhebend erzeugt und anschließend nur der Gewindegrund dieses vorgeschnittenen Gewindes mit dem nachfolgenden Gewindefurcher auf einen vorbestimmten Enddurchmesser spanlos durch Verformung verdichtet. Dadurch können vor allem die ersten Gewindegänge im Anschluss an einen Gewindeanschnitt schwingungsfester und weniger bruchgefährdet erzeugt werden, insbesondere für Befestigungsgewinde an Graugussgehäuses von Brennkraftmaschinen.

Der Werkzeugschaft der genannten Gewindeerzeugungswerkzeuge ist in der Regel wenigstens annähernd zylindrisch um seine Längsachse ausgeführt und/oder mit seinem vom Werkstück abgewandten Ende im Spannfutter einer Werkzeugmaschine aufgenommen und gehalten.

Es ist nun Aufgabe der Erfindung, ein neues Werkzeug und ein neues Verfahren zur Erzeugung eines Gewindes, insbesondere zur Erzeugung eines Innengewindes, anzugeben.

Diese Aufgabe wird hinsichtlich des Werkzeugs mit den Merkmalen des Patentanspruchs 1 und hinsichtlich des Verfahrens mit den Merkmalen des Anspruchs 12 gelöst. Vorteilhafte Ausgestaltungen und Weiterbildungen des Werkzeugs und Verfahrens gemäß der Erfindung ergeben sich aus den vom Patentanspruch 1 bzw. Patentanspruch 12 jeweils abhängigen Patentansprüchen.

Das Werkzeug gemäß Anspruch 1 ist zur Erzeugung (oder: Herstellung) eines Gewindes in einem Werkstück (oder allgemein: einem Körper) geeignet und bestimmt und umfasst
a) wenigstens einen Gewindeerzeugungsbereich (Gewindeherstellbereich, Arbeitsbereich) oder Gewindeerzeugungsabschnitt, der
a1) wenigstens einen Gewindefräsbereich oder -abschnitt sowie
a2) wenigstens einen spanlos arbeitenden Gewindeformbereich oder - abschnitt umfasst,
b) wobei der oder die Gewindefräsbereich(e) und der bzw. die Gewindeformbereich(e) jedes Gewindeerzeugungsbereiches
b1) so miteinander gekoppelt oder verbunden sind, dass sie gemeinsam um eine Werkzeugachse drehbar oder drehend sind, und
b2) entlang eines Außenumfanges des Gewindeerzeugungsbereiches in einer Drehrichtung um die Werkzeugachse versetzt (oder: in einem Winkelabstand) zueinander und/oder entlang des Außenumfanges des Gewindeerzeugungsbereiches in einer Drehrichtung (D) um die Werkzeugasche (A) hintereinander oder entlang des Außenumfanges des Gewindeerzeugungsbereiches in einer Drehrichtung (D) um die Werkzeugasche (A) aufeinander folgend angeordnet sind.

Beim Verfahren gemäß Patentanspruch 12 zur Erzeugung eines Gewindes in einem Werkstück wird ein Werkzeugs gemäß der Erfindung in einer Arbeitsbewegung bewegt, die
- eine Drehbewegung des Werkzeugs um die Werkzeugachse in einem vorgegebenen Drehsinn,
- und eine gleichzeitige Schraubenbewegung (oder: Helixbewegung) des Werkzeugs mit seiner Werkzeugachse um eine parallel zur Werkzeugachse gerichtete Mittelachse, d.h. eine zusammengesetzte Bewegung aus einer axiale Vorschubbewegung des Werkzeugs axial zur Werkzeugachse und einer gleichzeitigen Zirkularbewegung des Werkzeugs, bei der die Werkzeugachse des Werkzeugs sich um eine parallel zur Werkzeugachse verlaufende zentrale Drehachse, die vorzugsweise im Wesentlichen mit einer Mittelachse des zu erzeugenden oder erzeugten Gewindes zusammenfällt, dreht oder diese umkreist, umfasst. Es ergibt sich also insbesondere eine schraubenförmige Bewegung auf einem Zylinder mit der Drehachse als Zylinderachse.

Das Werkzeug zur Erzeugung eines Gewindes gemäß der Erfindung ist ein Kombinationswerkzeug, das sowohl spanend oder spanabhebend als auch spanlos arbeitet. Die Erfindung beruht dabei auf der Überlegung, einen spanabhebenden Bereich und einen spanlosen Bereich in Drehrichtung hintereinander anzuordnen, so dass die spanabhebenden Bereiche und die spanlos arbeitenden Bereiche bei Drehung des Werkzeugs um die Werkzeugachse nacheinander in der Reihenfolge, in der sie am Umfang des Werkzeugs angeordnet sind, in das Werkstück eingreifen. Es wird also in dieser Reihenfolge beim Erzeugen des Gewindeganges abwechselnd geschnitten und geformt oder umgekehrt geformt und geschnitten. Die spanabhebend arbeitenden Bereiche greifen also nur während eines Teils der Drehbewegung des Werkzeugs um seine eigene Werkzeugachse in das Werkstück ein, sind also Gewindefräsbereiche. Ebenso greifen auch die spanlos arbeitenden Bereiche als Gewindeformbereiche (oder: durch plastische Verformung des Materials des Werkstücks arbeitende) nur während eines Teils der Drehbewegung um die Werkzeugachse in das Werkstück ein. Es handelt sich also um eine intermittierende oder diskontinuierliche Arbeitsweise des Werkzeugs und des Verfahrens gemäß der Erfindung, wobei ein Gewindegang des Gewindes gleichzeitig sowohl gefräst als auch geformt wird. Es wird also insbesondere auch nach einer Formung in dem Gewindegang ein Fräsbereich des Werkzeugs fräsend eingreifen, was beim Stand der Technik ebenfalls nicht bekannt ist.

Der Begriff der Erzeugung oder Herstellung eines Gewindes umfasst im Sinne der vorliegenden Anmeldung nicht nur die unmittelbare Erzeugung des gesamten Gewindes in eine vormals ebene oder gewindefreie Oberfläche des Werkstücks, sondern auch das weitere Einarbeiten oder Nachbearbeiten eines schon in der Werkstückoberfläche vorerzeugten, beispielsweise vorgeschnittenen, Gewindes(oder: Vorgewindes, Rohgewindes). Die Werkzeugachse ist in der Regel eine Längsachse und/oder Hauptträgheitsachse oder Eigenachse des Werkzeugs oder dessen Werkzeugschafts und/oder eine zentral durch das Werkzeug verlaufende Achse.

In den bevorzugten Fällen, in denen ein Gewinderzeugungsbereich mehrere Gewindeformbereiche und/oder Gewindefräsbereiche umfasst, die in Drehrichtung oder Umfangsrichtung aufeinander folgen, kann die Reihenfolge der Gewindeformbereiche und Gewindefräsbereiche unterschiedlich gewählt sein. Insbesondere können sich immer Gewindefräsbereich und Gewindeformbereich abwechseln, so dass immer auf einen Gewindeformbereich ein Gewindefräsbereich folgt und umgekehrt. Oder, alternativ, können auch wenigstens zwei Gewindeformbereiche und/oder wenigstens zwei Gewindefräsbereiche unmittelbar aufeinander folgen, so dass kein Gewindefräsbereich bzw. Gewindeformbereich dazwischen liegt. Es genügt, wenn wenigstens einer der Gewindeformbereiche und wenigstens einer der Gewindefräsbereiche unmittelbar in Drehrichtung aufeinander folgen. Ansonsten kann die Reihenfolge in weiten Grenzen frei gewählt werden.

Das Werkzeug und das Verfahren gemäß der Erfindung sind zum Erzeugen sowohl von Innengewinden an einer im Allgemeinen zylindrischen oder in Spezialfällen auch sphärischen (kugelflächenförmigen) Innenfläche in dem Werkstück als auch von Außengewinden an einer im Allgemeinen zylindrischen oder in Spezialfällen auch sphärischen Außenoberfläche des Werkstücks geeignet. Die Arbeitsbewegung (oder: Gewindeerzeugungsbewegung) des Werkzeugs ist in beiden Fällen prinzipiell gleich und unterscheidet sich lediglich nur darin, dass beim Innengewinde das Werkzeug innerhalb der Innenfläche des Werkstücks auf einer kleineren Bahn als das zu erzeugende Gewinde bewegt wird und von innen zum Werkstück zugestellt wird und bei einem Außengewinde das Werkzeug außerhalb der Außenfläche des Werkstücks auf einer größeren Bahn als das zu erzeugende Gewinde bewegt wird und von außen zum Werkstück zugestellt wird.

Im Allgemeinen sind der oder die Gewindeerzeugungsbereiche so ausgebildet und angeordnet, dass bei Drehung des Werkzeugs um die Werkzeugachse und bei gleichzeitiger Drehung der Werkzeugachse um eine Mittelachse mit einer konstanten Drehgeschwindigkeit sowie bei einer gleichzeitigen axialen Vorschubbewegung des Werkzeugs axial zur Werkzeugachse mit konstanter Vorschubgeschwindigkeit der oder die Gewindeerzeugungsbereich(e) bei Eingriff in eine zylindrische Werkstückoberfläche ein Gewinde mit einer durch die Vorschubgeschwindigkeit bestimmten konstanten Steigung erzeugt bzw. erzeugen.

In einer besonders vorteilhaften Ausführungsform ist das Wirkprofil (oder: wirksame Profil) jedes Gewindeerzeugungsbereiches einem vorgegebenen Nennprofil (oder: vorgegebenen Endprofil) des zu erzeugenden Gewindes angepasst oder entspricht diesem. Das Wirkprofil eines Gewindeerzeugungsbereiches (oder Gesamtwirkprofil) ist definiert als Profil der Drehprojektion aller Gewindefräsbereiche und aller Gewindeformbereiche dieses Gewindeerzeugungsbereiches um die Werkzeugachse auf eine durch die Werkzeugachse verlaufende Projektionsebene. Mit anderen Worten, das Wirkprofil eines Gewindeerzeugungsbereiches entsteht also durch rotatorische Überlagerung der einzelnen Profile aller Gewindefräsbereiche und aller Gewindeformbereiche dieses Gewindeerzeugungsbereiches bei Rotation um die Werkzeugachse. Betrachtet man die Drehprojektion der Gewindefräsbereiche und Gewindeformbereiche desselben Gewindeerzeugungsbereiches auf dieselbe Projektionsebene, so ergibt sich ein überlagertes oder zusammengesetztes Profil, dessen Außenkontur das Wirkprofil des gesamten Gewindeerzeugungsbereiches darstellt. Das Wirkprofil des Gewindeerzeugungsbereiches bildet sich auf das Gewindeprofil im Werkstück ab. Das Gewindeprofil entspricht dabei auch der Kontur eines Querschnitts des Gewindeganges senkrecht zu dessen schraubenförmigen Verlauf oder eines Längsschnittes durch das Gewinde in einer die Gewindemittelachse enthaltenden Schnittebene. Da das Wirkprofil des Gewindeerzeugungsbereiches sich bei einer zweidimensionalen Drehbewegung ergibt, ist für die dritte Dimension, also in Richtung der Schrauben- oder Zylinderachse des Gewindes, eine entsprechende Schraubenbewegung des Werkzeuges vorgesehen. Das Werkzeug arbeitet also bevorzugt als Zirkulargewindewerkzeug

Das resultierende Wirkprofil jedes Gewindeerzeugungsbereichs kann aus den einzelnen Wirkprofilen der Gewindefräsbereiche und der Gewindeformbereiche der Gewindeerzeugungsbereiche in unterschiedlicher Weise und Anordnung zusammengesetzt werden. Außerdem können sich die Wirkprofile der Gewindefräsbereiche oder der Gewindeformbereiche der Gewindeerzeugungsbereiche voneinander unterscheiden und ein gemeinsames zusammengesetztes Wirkprofil ergeben oder auch identisch zueinander sein.

In einer vorteilhaften Ausführungsform wird ein, vorzugsweise zentraler und/oder radial zur Werkzeugachse am weitesten nach außen ragender, Teilbereich des Gesamtwirkprofils des Gewindeerzeugungsbereiches vom Wirkprofil des oder der Gewindeformbereiche(s) dargestellt und benachbarte Teilbereiche des Gesamtwirkprofils von dem oder den Gewindefräsbereichen.

Vorzugsweise sind in wenigstens einem Gewindeerzeugungsbereich Gewindefräsbereich(e) und Gewindeformbereich(e) so ausgebildet und angeordnet, dass die Oberfläche des von diesem Gewindeerzeugungsbereich erzeugten Gewindegangs im Werkstück teilweise gefräst und teilweise geformt ist, insbesondere dass ein Gewindegrund des von diesem Gewindeerzeugungsbereich erzeugten Gewindegangs im Werkstück geformt ist und zwei an den Gewindegrund sich anschließende Gewindeflanken wenigstens teilweise gefräst sind. Das damit erzeugte Gewinde hat also insbesondere einen geformten oder gefurchten Gewindegrund und wenigstens teilweise gefräste Gewindeflanken. Der Gewindegrund ist dabei vorzugsweise über die gesamte Gewindetiefe geformt, so dass eine vergleichsweise hohe Verdichtung und Verfestigung des Materialgefüges im Werkstück in diesem geformten Bereich erzeugt wird und damit eine hohe Bruchsicherheit und Festigkeit des Gewindes. Durch die materialabtragende Bearbeitung des Werkstücks in den anderen Teilbereiche, insbesondere der Gewindeflanken, wird das bei einer ausschließlichen Formung auftretende Fließen von Material in den Gewindekern weitgehend verhindert. Es werden also in vorteilhafter Weise die Vorteile von spanabhebender und spanloser Gewindeerzeugung miteinander verknüpft.

Das Werkzeug erlaubt darüber hinaus eine sehr genaue Abstimmung der Profile von Gewindefräsbereich und Gewindeformbereich. Ein Anlaufbereich mit zunehmendem Außenradius wie bei einem konventionellen Gewindefurcher oder Gewindefräser ist nicht mehr erforderlich, wenn auch dennoch zusätzlich möglich. Darüber hinaus ist auch ein Einfädeln des Gewindefurchteils nicht mehr erforderlich.

In einer vorteilhaften Ausführungsform weist wenigstens ein Gewindeerzeugungsbereich wenigstens eine senkrecht zur Werkzeugachse und steigungsfrei verlaufende, radial nach außen ausgebildete oder ausgestülpte Rille (oder: einen Grat) auf, die sich über wenigstens einen Teil des Umfangs erstreckt und insbesondere durch Trennnuten in Teilrillen getrennt oder unterteilt sein kann. An den Rillen oder Teilrillen werden jeweils wenigstens ein Gewindeformbereich, insbesondere als weiter nach außen ragende Formkeile oder Drückstollen oder Gewindeform- oder -furchzähne, und vorzugsweise auch wenigstens ein Gewindefräsbereich, insbesondere Gewindefräszahn, ausgebildet, insbesondere durch Anschnitte und/oder Profilierung der Rillen.

Es können ein oder auch mehrere, axial zur Werkzeugachse hintereinander angeordnete Gewindeerzeugungsbereiche vorgesehen sein, wobei mit mehreren Gewindeerzeugungsbereichen die Zahl der Umläufe der Zirkularbewegung reduziert werden kann.

Vorteilhaft ist es, wenn wenigstens ein Gewindeerzeugungsbereich drehsymmetrisch bezüglich der Werkzeugachse mit einer n-zähligen Drehsymmetrie mit der natürlichen Zahl n größer 1 ausgebildet ist.

Zusätzlich zu dem wenigstens einen Gewindeerzeugungsbereich kann das Werkzeug auch einen oder mehrere spanabhebende Bereich(e) aufweisen, insbesondere zum spanenden Erzeugen oder Vorbereiten einer Werkstückoberfläche für das Gewinde in einer ersten Variante und/oder eines Voxgewindes (oder: Rohgewindes) in der bzw. einer Werkstückoberfläche für das Gewinde in einer zweiten Variante. Die Geometrien der Arbeitsbereiche können insbesondere unterschiedlich gewählt werden im Hinblick auf unterschiedliche Funktionen oder Aufgaben wie z.B. glatte Oberfläche, stabileren Aufbau oder Polygon oder Eingriffstiefe.

Mit dem Werkzeug in der ersten Variante ist ein Erzeugen eines Gewindes auch in das Vollmaterial eines Werkstücks möglich, da der spanabhebende Bereich die Werkstückoberfläche für den Gewindeerzeugungsbereich durch Materialabtrag aus dem Werkstück selbst herstellt. Es ist also eine Vorbearbeitung des Werkstücks, insbesondere das Vorerzeugen einer Bohrung (Kernlochbohrung) bei einem Innengewinde, nicht notwendig, wenn auch natürlich zusätzlich möglich Der spanabhebende Bereich zum spanabhebenden Erzeugen der Werkstückoberfläche in der ersten Variante ist vorzugsweise als Bohrer ausgebildet, insbesondere mit kontinuierlichem Schnitt oder kontinuierlichem Eingriff der Schneide(n) ins Material des Werkstücks, kann aber auch als Fräser ausgebildet sein, also insbesondere mit diskontinuierlichem oder unterbrochenem Schnitt oder mit diskontinuierlichem Eingriff der Schneide(n) ins Material des Werkstücks. Analog ist der spanabhebende Bereich zum spanabhebenden Erzeugen des Vorgewindes in der zweiten Variante in einer vorteilhaften Ausführungsform ein Gewindebohrer, arbeitet also insbesondere mit kontinuierlichem Schnitt, oder in einer anderen Ausführungsform ein Gewindefräser, arbeitet also mit unterbrochenem Schnitt. Der Gewindebohrer wird vor allem bei einer Durchgangsbohrung im Werkstück eingesetzt und kann dann während des Zirkulargewindeerzeugens auβerhalb der Durchgangsbohrung sein.

Die Kombination der beiden Varianten beinhaltet insbesondere die Möglichkeit, dass ein erster spanabhebender Bereich die Werkstückoberfläche, insbesondere die, im Allgemeinen zylindrischen, Wandungsabschnitte des Werkstücks als Außenwandung für ein Außengewinde oder als Innenwandung für ein Innengewinde, durch Materialabtrag vorbereitet, ein zweiter spanabhebender Bereich in diese vom ersten spanabhebenden Bereich vorbereitete Werkstückoberfläche das Vorgewinde einarbeitet und schließlich wenigstens ein Gewindeerzeugungsbereich das Vorgewinde nachbearbeitet oder fertig stellt.

Die Werkstückoberfläche oder das Vorgewinde wird entweder mit dem spanabhebenden Bereich in derselben Arbeitsbewegung wie das Gewinde oder Fertiggewinde erzeugt oder in einem vorgeschalteten Arbeitsschritt vor der Arbeitsbewegung zum Erzeugen des Gewindes oder Fertiggewindes erzeugt, wobei vorzugsweise in dem vorgeschalteten Arbeitsschritt das Werkzeug unter Drehung um seine Werkzeugachse in einer im Wesentlichen axialen Vorschubrichtung in das Werkstück bewegt wird.

Ferner kann auch als einziger oder zusätzlicher spanabhebender Bereich ein entgegengesetzt zur Vorschubrichtung zum Gewindeformbereich benachbarter spanabhebender Bereich zum Erzeugen eines, insbesondere gegenüber einem Gewindekern, vergrößerten, insbesondere gestuften oder angefasten, Eingangsbereichs oder Mündungsbereich des Gewindes vorgesehen sein.

In einer Weiterbildung kann das Werkzeug auch wenigstens einen dem oder den Gewindeerzeugungsbereichen nachgeschalteten Gewindeformbereich zum Nachbearbeiten und/oder Glätten des Gewindes aufweisen.

In einer Ausführungsform ist wenigstens ein zusätzlicher spanabhebender Bereich für eine entgegengesetzt zur vorgegebenen axialen Vorschubrichtung des Werkzeugs und axial zur Werkzeugachse gerichteten Rückholrichtung des Werkzeugs ausgelegt und/oder zum Nachschneiden oder spanenden Nachbearbeiten des Gewindekerns des vom Gewindeformbereich erzeugten oder nachbearbeiteten Gewindes, insbesondere auf ein gewünschtes Gewindekernmaß, vorgesehen.

Vorzugsweise wird das Werkzeug nach dem Erzeugen des Gewindes wieder in einer, insbesondere axialen oder schraubenförmigen, Rückholbewegung entgegen der Vorschubrichtung aus dem Werkstück herausbewegt oder relativ zu diesem wegbewegt, wobei vorzugsweise der oder wenigstens ein spanabhebende(r) Bereich bei der Rückholbewegung einen inneren Abschluss oder den Kern des Gewindes erzeugt oder anpasst, insbesondere einen Teil des beim Gewindeformen durch den Gewindeformbereich radial nach innen nachgeflossenen oder verdrängten Materials des Werkstücks abträgt.

Es wird insbesondere ein Gewinde mit einer vollständigen Zahl von Gewindeumläufen erzeugt.

Die Vorschubgeschwindigkeit bei der aus axialer Vorschubbewegung und Zirkularbewegung zusammengesetzten Schraubenvorschubbewegung und/oder die Rückholgeschwindigkeit ist vorzugsweise dem Steigungsverlauf des Gewindes angepasst.

Die Drehgeschwindigkeit der Drehung des Werkzeugs um die eigene Werkzeugachse ist vorzugsweise um einen Faktor aus einem Bereich von 50 bis 1000 größer als die Drehgeschwindigkeit der Zirkularbewegung.

Es kann in verschiedenen Ausgestaltungen wenigstens ein Gewindeerzeugungsbereich radial bezüglich der Werkzeugachse entweder weiter oder weniger weit nach außen ragen oder entweder einen größeren oder kleineren maximalen radialen Außendurchmesser aufweisen als wenigstens ein zusätzlicher spanabhebender Bereich, insbesondere als wenigstens ein in Vorschubrichtung näher an dem freien Ende des Werkzeugs als der Gewindeerzeugungsbereich angeordneter spanabhebender Bereich.

Spanabhebende(r) Bereich(e) und/oder Gewindeerzeugungsbereich(e) und/oder Gewindefombereich(e) können einstückig mit dem Werkzeugschaft oder einem Werkzeugkopf ausgebildet sein oder auch als vorgefertigte(s) Teil(e) mit dem Werkzeugschaft oder -kopf verbunden sein, beispielsweise aufgeschrumpft oder aufgelötet oder -geschweißt oder -geklebt oder verschraubt oder geklemmt werden. Ferner können zusätzliche Verschleißschutzschichten auf das Werkzeug oder dessen Arbeitsbereichen aufgebracht werden. Das Werkzeug kann insbesondere einen Trägerkörper, insbesondere einem Werkzeugschaft oder Werkzeugkern, aufweisen, wobei der oder jeder Gewindeerzeugungsbereich und/oder jeder weitere spanabhebende Bereich und/oder jeder weitere spanlos arbeitende Bereich an dem Trägerkörper ausgebildet oder angebracht ist oder sind. Wenigstens ein Gewindeformbereich und/oder wenigstens ein Gewindfräsbereich und/oder wenigstens ein Gewindeerzeugungsbereich und/oder wenigstens ein weiterer spanabhebender Bereich kann an einem vorgefertigten Teil ausgebildet oder aus einem vorgefertigten Teil gebildet sein und jedes vorgefertigte Teil an dem Trägerkörper mittels Befestigungsmitteln befestigt sein.

Besonders vorteilhaft ist es, wenn der Werkzeugschaft aus einem Werkzeugstahl, insbesondere einem Schnellarbeitsstahl gefertigt ist. Das kann beispielsweise eine Hochleistungsschnellstahl (HSS-Stahl) oder ein cobaltlegierter Hochleistungsschnellstahl (HSS-E-Stahl) sein. Die Gewindeerzeugungsbereiche sind im Allgemeinen aus einem Material, das härter ist als das Material des Werkstücks und ausreichende Zähigkeit aufweist, vorzugsweise aus Hartmetall oder aus einer Hartmetalllegierung, insbesondere P-Stahl oder K-Stahl oder Cermet, oder aus Sinterhartmetall, insbesondere aus Wolframkarbid oder Titannitrid oder Titankarbid oder Titankarbonitrid oder Aluminiumoxid, oder aus einer Schneidkeramik, insbesondere polykristallines Bornitrid (PKB), oder aus polykristallinem Diamant (PKD) gefertigt.

In einer besonders vorteilhaften Ausführungsform sind am Umfang wenigstens eines Gewindeerzeugungsbereichs und/oder wenigstens eines spanabhebenden Bereichs eine oder mehrere Nuten oder im Werkzeug Kanäle vorgesehen jeweils zur Führung eines fluiden Mediums, insbesondere eines Kühl- und/oder Schmiermittels, um die Reibung und/oder die Wärmeentwicklung zu reduzieren und die entstehende Wärme abzuführen, und/oder zur Abführung der erzeugten Späne (Spannuten). Die Nuten oder Kanäle können gerade und/oder parallel oder axial zur Werkzeugachse und/oder oder schräg zur Werkzeugachse und/oder in Längsrichtung des Werkzeugs verlaufen oder auch um die Werkzeugachse gedrallt oder schraubenförmig (Drallnuten), also verdrillt bzw. mit einer Drehung um den Umfang des Werkzeugs oder de Werkzeugachse, ausgebildet sein.

In den Spannuten können nun zumindest die Schneide(n) des oder jedes spanabhebenden Bereichs und/oder der oder die Drückstollen des oder jedes Gewindeformbereichs von der Nut zurückversetzt sein zum Schutz vor einer Beschädigung oder Abnutzung durch die Späne. Ferner können auch Trennnuten zwischen den Gewindefräsbereichen und den Gewindeformbereichen angeordnet oder ausgebildet sein.

In den Nuten und/oder vor den Gewindeformbereichen oder Schneidbereichen können auch Kanäle münden zum Zuführen von unter Druck stehendem Gas, insbesondere Druckluft, insbesondere zum Wegblasen von Spänen von den Arbeitsbereichen.

Die Erfindung wird im Folgenden anhand von Ausführungsbeispielen weiter erläutert. Dabei wird auch auf die Zeichnung Bezug genommen, in deren
- FIG 1: ein Gewindewerkzeug mit zwei Formkeilen und zwei Frässchneiden in einer perspektivischen Ansicht,
- FIG 2: das Werkzeug gemäß FIG 1 in einer etwas nach vorne gedrehten perspektivischen Ansicht,
- FIG 3: ein Querschnitt des Werkzeugs gemäß FIG 1 und FIG 2,
- FIG 4: ein Längsschnitt durch das Werkzeug gemäß FIG 1 bis FIG 3 im Bereich der Gewindeformteile,
- FIG 5: ein Längsschnitt durch das Werkzeug gemäß FIG 1 bis FIG 4 im Bereich der Gewindefräszähne,
- FIG 6: eine Gegenüberstellung eines Gewindefräszahnes und eines Gewindefurchzahnes des Werkzeugs in einer Querschnittsdarstellung,
- FIG 7: eine Überlagerung der beiden Querschnitte von Gewindefurchzahn und Gewindefräszahn gemäß FIG 6,
- FIG 8: das Arbeitsverfahren des Werkzeugs beim Erzeugen des Gewindes in dem Werkstück in einer Prinzipdarstellung,
- FIG 9: das Werkzeug vor dem Eingriff in das Werkstück in einer Schnittdarstellung,
- FIG 10: das Werkzeug beim Eingreifen des Werkzeuges in das Werkstück,
- FIG 11: ein weiterer Eingriff des Werkzeugs in das Werkstück und
- FIG 12: der volle Eingriff des Werkzeugs in das Werkstück,
- FIG 13: der den im Werkstück erzeugten Gewindegang des Gewindes in einem Längsschnitt,
- FIG 14: ein Werkzeug zum Erzeugen eines Kugelgewindes in einer perspektivischen Darstellung,
- FIG 15: das Werkzeug gemäß FIG 14 in einem Querschnitt,
- FIG 16: das Werkzeug gemäß FIG 14 und FIG 15 in einem Längsschnitt,
- FIG 17: das Werkzeug gemäß FIG 14 bis FIG 16 in einem um 90° gedrehten Längsschnitt,
- FIG 18: ein ähnliches Werkzeug wie in FIG 14 bis 17, jedoch mit Drallnuten in einer perspektivischen Ansicht,
- FIG 19: ein Werkzeug gemäß FIG 18 mit zusätzlichen Trennnuten zwischen Fräszähnen und Formzähnen in einer etwas gedrehten perspektivischen Ansicht
- FIG 20: eine Gegenüberstellung von Gewindefräszahn und Gewindefurchzahn eines Werkzeugs gemäß FIG 14 bis 19,
- FIG 21: die Überlagerung der Profile von Gewindefräszahn und Gewindefurchzahn gemäß FIG 20,
- FIG 22: den mit den Profilen gemäß FIG 20 und 21 erzeugten Gewindegang in einem Längsschnitt,
- FIG 23: eine Gegenüberstellung eines Gewindefräszahnes und eines Gewindefurchzahnes mit einer besonderen asymmetrischen Gestaltung,
- FIG 24: die Überlagerung der beiden Profile der beiden Zähne gemäß FIG 23 und
- FIG 25: das mit den beiden Zähnen gemäß FIG 23 und FIG 24 den erzeugten Gewindegang in einem Längsschnitt,
- FIG 26: ein Werkzeug mit einem zusätzlichen axialen Bohrteil in einer perspektivischen Darstellung,
- FIG 27: ein Werkzeug gemäß der Erfindung mit einem zusätzlichen Zirkularbohrteil,
- FIG 28: ein Längsschnitt durch den vorderen Teil des Werkzeugs gemäß FIG 27,
- FIG 29: ein Werkzeug mit einem Zirkularbohrteil sowie einem abnehmbaren Werkzeugkopf,
- FIG 30: ein Werkzeug mit separat einsetzbaren Gewindefräselementen,
- FIG 31: ein Werkzeug mit separat einsetzbaren Gewindeformelementen und Gewindefräselementen,
- FIG 32 bis 37: die Arbeitsschritte beim Erzeugen eines Gewindes mit einem Werkzeug gemäß der Erfindung in chronologischer Reihenfolge und
- FIG 38: ein Werkzeug mit zwei Fräsleisten und zwei Formleisten
jeweils schematisch dargestellt sind. Einander entsprechende Teile und Größen sind in den FIG 1 bis FIG 38 mit denselben Bezugszeichen versehen.

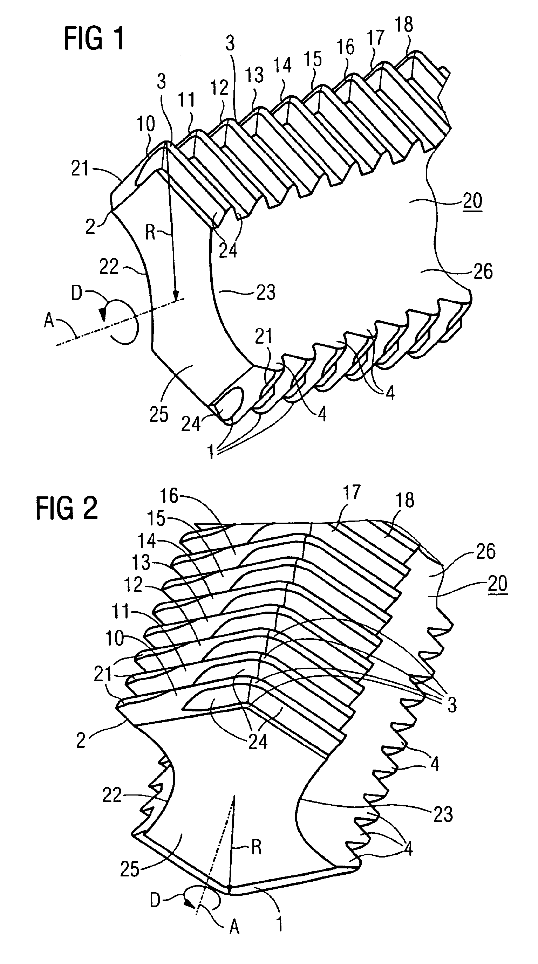

Das Werkzeug 20 gemäß FIG 1 bis 5 weist einen Werkzeugschaft 26 auf, der um eine zentral längs durch den Werkzeugschaft 26 verlaufende Werkzeugachse A, die insbesondere eine Hauptträgheitsachse oder Eigenachse ist, rotierbar ist. Der Werkzeugschaft 26 ist in der Regel im Wesentlichen zylindrisch, also im Querschnitt im Wesentlichen kreisförmig, geformt, und ist im Betrieb an einem Ende in eine nicht dargestellte Einspannvorrichtung oder einen Werkzeughalter oder ein Werkzeugfutter einer Werkzeugmaschine gehaltert oder eingespannt, die bzw. das mit wenigstens einem Antrieb gekoppelt ist zum Antreiben oder Bewegen des Werkzeugs. Der Werkzeugschaft 26 kann neben der Kreisform auch beliebige andere, auch einen sich vergrößernde oder verkleinernde und/oder sich in der Form verändernde Querschnittsformen aufweisen.

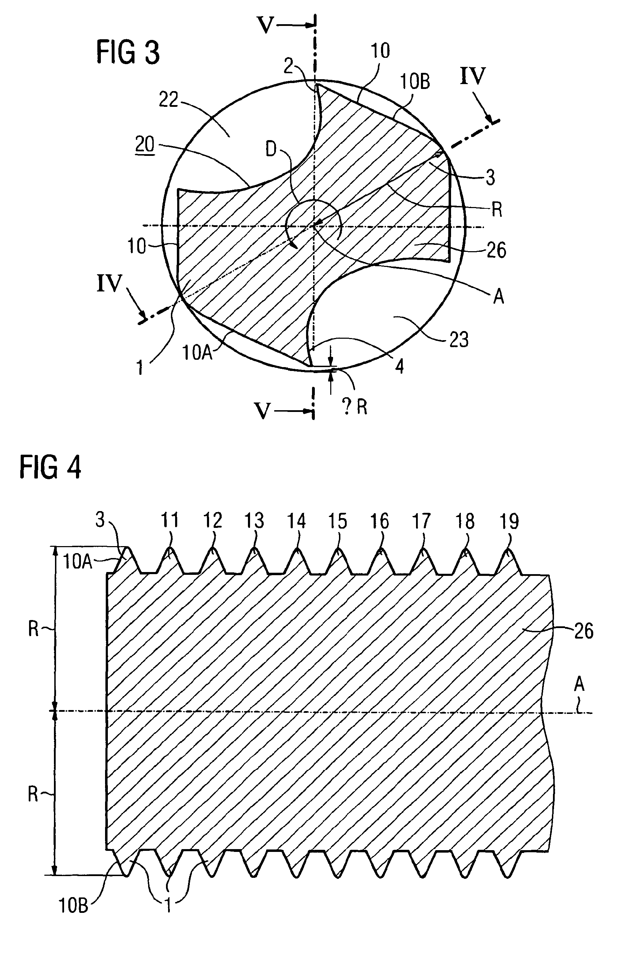

Am Außenumfang oder der Mantelfläche des Werkzeugschaftes 26 sind gerade, ohne Steigung und im Wesentlichen senkrecht zur Werkzeugachse A sowie parallel zueinander verlaufende Arbeitsbereiche oder Gewindeerzeugungsbereiche 10 bis 18 angeordnet, die in Form von nach außen ragenden Rillen ausgebildet sind und durch zwei gegenüberliegende Nuten 22 und 23 jeweils in zwei Teilbereiche, z. B. 10A und 10B in FIG 3, unterteilt sind. Die Rillen der Gewindeerzeugungsbereiche 10 bis 18 sind im Querschnitt zahnförmig ausgebildet und in einem Bereich, der in einem vorgegebenen Drehsinn in die jeweilige Nut 22 bzw. 23 mündet, angeschnitten, so dass dort eine zahnartige Gewindefrässchneide oder ein Gewindefräszahn 4 gebildet ist. Etwa in der Mitte weist jeder Teilbereich der Gewindeerzeugungsbereiche 10 bis 18 einen Gewindeformbereich oder Gewindeformzahn 1 und 3 auf, der radial von der Werkzeugachse A weg am weitesten nach außen ragt, an dem also das Werkzeug 20 und dessen Schaft 26 den größten Außenradius R aufweist.

Im Bereich der Gewindeformzähne 1 und 3 weisen die Rillen der Gewindeerzeugungsbereiche 10 bis 18 an beiden Seiten Freischliffe 24 auf, die zu einer Verjüngung oder Querschnittsverminderung an den Flanken der Gewindeformzähne 1 und 3 führen. Zur Bildung des Zahnkopfbereiches der Gewindefräszähne 2 und 4 ist an der Rille im Außenbereich zusätzlich ein Freischliff 21 vorgesehen, mit der die ursprünglich abgerundete Kopfbereich- oder Außenfläche der Rillen der Gewindeerzeugungsbereiche 10 bis 18 gerade geschliffen sind.

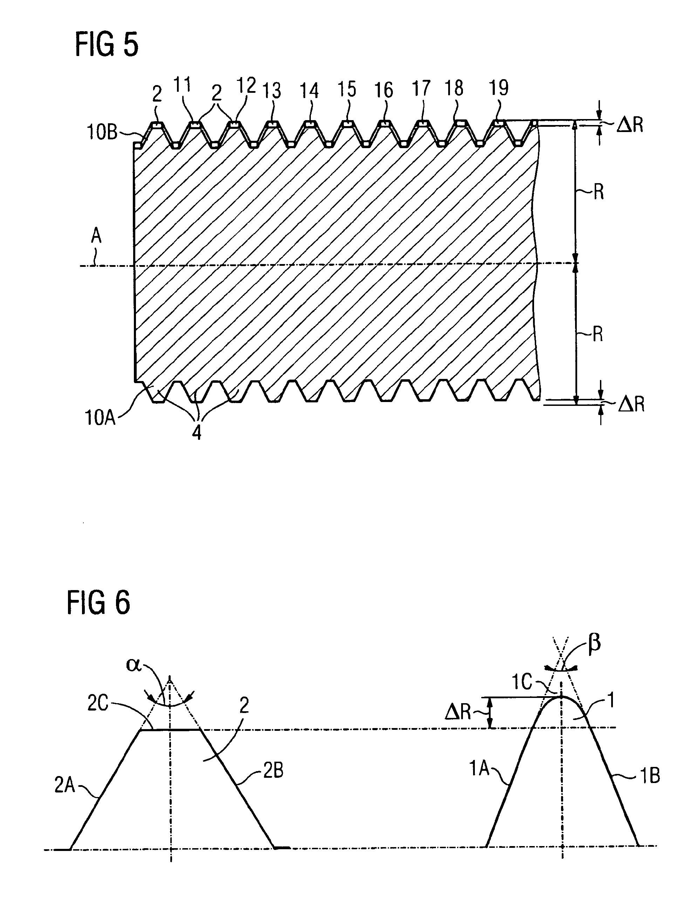

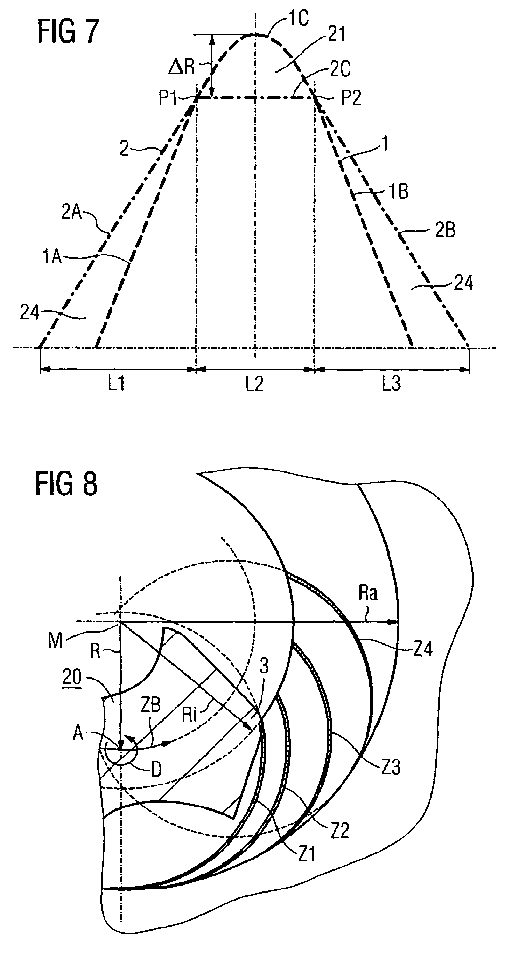

Dadurch weisen die Gewindeformzähne 1 und 3 eine größere radiale Abmessung auf als die Gewindefräszähne 2 und 4, jedoch axial zur Werkzeugachse A oder in ihrer Breite eine kleinere Abmessung. Dies ist gut in den Schnittdarstellungen der FIG 6 und 7 zu erkennen, wo der Kopfbereich 1C des Gewindeformzahnes 1 radial weiter nach außen steht oder eine größere Höhe aufweist als der flache Zahnkopf 2C des Gewindefräszahnes 2 und die beiden Flanken 2A und 2B des Gewindefräszahnes 2 wiederum jeweils weiter nach außen verlaufen als die Flanken 1A und 1B des Gewindeformzahnes 1.
Der radiale Unterschied zwischen den Zahnköpfen 1C und 2C ist mit ΔR bezeichnet.

Die Freischliffe 21 und 24 sind nun ferner so gewählt, dass sich die Flanken 1A und 2A sowie 1B und 2B von Gewindeformzahn 1 und Gewindefräszahn 2 jeweils in einem Schnittpunkt P1 bzw. P2 treffen, die auch dem Übergangspunkt zwischen dem Zahnkopf 2C und den beiden Flanken 2A und 2B des Gewindefräszahnes 2 entsprechen. Dadurch steht der Zahnkopf 1C des Gewindeformzahnes 1 über den gesamten Zahnkopf 2C des Gewindefräszahnes 2 radial nach außen vor. Der Öffnungswinkel α des Gewindefräszahnes 2 ist größer als der Öffnungswinkel β des Gewindeformzahnes 1, der typischerweise um die 50° beträgt.

Folglich wird das durch die Überlagerung der beiden Zähne 1 und 2 entstandene Wirkprofil jedes Gewindeerzeugungsbereichs 10 bis 18 über die Länge L2 zwischen den beiden Schnittpunkten P1 und P2, komplett durch den Gewindeformzahn 1 und dessen Zahnkopf 1C dargestellt. An den Flanken bilden dagegen die Zahnflanken 2A und 2B des Gewindefräszahnes 2 die wirksamen Wirkflächen des Gewindeerzeugungsbereichs 10 bis 18. Dadurch wird über die links und rechts von dem zentralen Teilbereich der Länge L2 angeordneten Teilbereiche der Längen L1 und L3, die den axialen Abmessungen der Zahnflanken 2A und 2B des Gewindefräszahnes 2 entsprechen, das Wirkprofil durch diese fräsenden Zahnflanken 2A und 2B dargestellt.

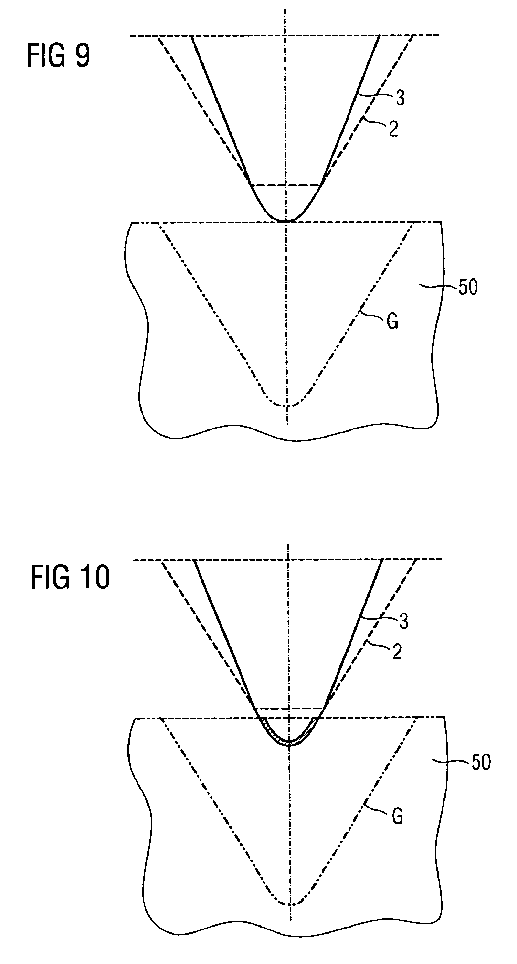

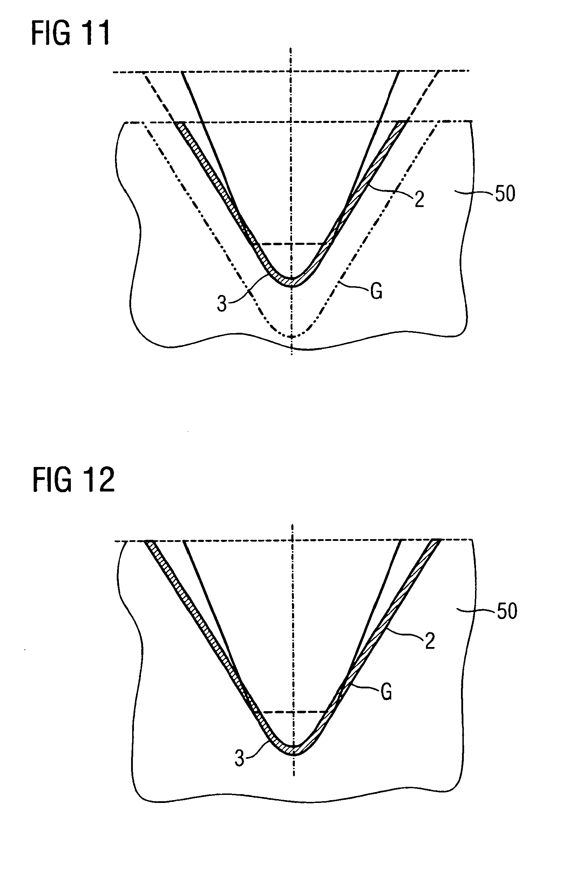

Die FIG 8 bis 12 veranschaulichen das Arbeitsverfahren des Werkzeugs 20 beim Erzeugen des Gewindes G in vier Momentaufnahmen Z1 bis Z4. Die Position Z1 in FIG 8 entspricht der Stellung von Werkzeug 20 zum Werkstück 50 gemäß FIG 9, bei der das Werkzeug 20 und dessen Gewindeformzähne und Gewindefräszähne noch nicht im Eingriff mit dem Werkstück 50 sind. Die Position Z2 in FIG 8 entspricht der Schnittdarstellung in FIG 10 in einem radialen Schnitt, bei der das wirksame Furchprofil schon voll im Eingriff des Werkstücks 50 ist. Die Stellung Z3 des Werkzeugs 20 in FIG 8 entspricht im radialen Schnitt der Darstellung in FIG 11, bei der das Furchprofil voll und das Fräsprofil teilweise im Eingriff sind. Die Stellung Z4 in FIG 8 entspricht ferner im radialen Schnitt der Situation in FIG 12, bei der sowohl Furchprofil als auch Fräsprofil voll im Eingriff sind, also das gesamte Werkzeug voll oder im maximalen Eingriff zum Werkstück 50 ist und somit sich das Wirkprofil des Werkzeugs auf das Nennprofil des Gewindes G abbildet, das strichpunktiert dargestellt ist.

Das Werkzeug 20 ist in einer momentanen Stellung relativ zum Werkstück 50 zum besseren Verständnis angedeutet. Die Werkzeugachse A ist senkrecht zur Zeichenebene gerichtet. Das Werkzeug 20 dreht sich in der eigenen Rotation im Drehsinn D um seine Werkzeugachse A und wird gleichzeitig um die Mittelachse M des Gewindes G mit seiner Werkzeugachse A parallel zur Mittelachse M in einer Zirkularbewegung ZB bewegt. Schließlich wird das Werkzeug 20 auch noch gemäß FIG 8 senkrecht zur Zeichenebene nach unten in einer axialen Vorschubbewegung VB parallel zur Werkzeugachse A bewegt. Es resultiert eine helikale Vorschubbewegung des Werkzeugs entlang einer Schraubenbewegung, die sich aus der Überlagerung der Zirkularbewegung ZB und der linearen Vorschubbewegung VB ergibt. Die Vorschubgeschwindigkeit und Vorschubrichtung des Werkzeugs relativ zum Werkstück ist also tangential an diese Schraubenlinie oder Helix gerichtet.

Das Werkzeug 20 wird mit einer im Vergleich zur Rotationsgeschwindigkeit der Zirkularbewegung ZB um die Mittelachse M sehr viel größeren Drehgeschwindigkeit oder Drehzahl um seine eigene Werkzeugachse A im Drehsinn D angetrieben. Das Verhältnis aus Drehgeschwindigkeit der Drehbewegung um die eigene Werkzeugachse A und der Drehzirkularbewegung ZB um die Mittelachse M liegt typischerweise in einem Bereich zwischen 50 und 1000. Dadurch greifen die entlang des Umfangs hintereinander angeordneten Gewindeformzähne 1 und 3 und Gewindefräszähne 2 und 4 schnell hintereinander in das Werkstück 50 ein und erzeugen dadurch gemeinsam den Gewindegang des Gewindes G. Der Innenradius oder Kernradius des Gewindes G ist mit Ri bezeichnet und der Außenradius des Gewindes G mit Ra.

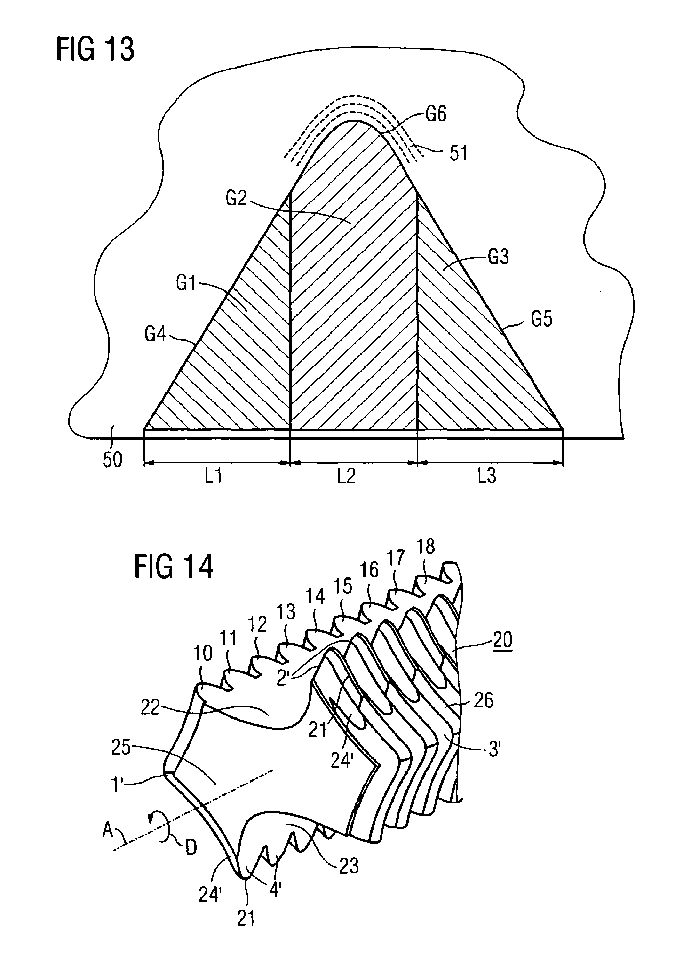

FIG 13 zeigt das mit diesen Werkzeug fertig erzeugte Gewinde in einem einem Gewindegang entsprechenden Abschnitt in einem Längsschnitt axial zur Werkzeugachse. Das mit dem Wirkprofil der sich überlagernden Gewindeformzähne 1 und 3 sowie der Gewindefräszähne 2 und 4 des Werkzeugs gemäß den FIG 1 bis 7 bei der Zirkularbewegung des Werkzeugs gemäß den FIG 8 bis 12 ergebende Gewindeprofil ist am Beispiel eines Gewindeganges dargestellt. Der mittlere in einer Richtung schraffierte Gewindebereich G2 weist die Länge L2 auf und ist ausschließlich von den Gewindeformzähnen 1 und 3 erzeugt. Die beiden äußeren Gewindebereiche G1 und G3 weisen die Längen L1 und L3 auf, die typischerweise gleich sind, also L1 = L3, und sind gefräst, also mit den Gewindefräszähnen 2 und 4 erzeugt. Die Gewindeflanken G4 und G5 des Gewindes sind somit geschnitten oder gefräst, während der Gewindegrund oder Gewindekopf G6 des Gewindes durch Umformung spanlos erzeugt ist. In einem den geformten Gewindegrund G6 umgebenden Bereich 51 des Werkstücks 50 ist das Material des Werkstücks 50 somit verdichtet und verfestigt und die Wahrscheinlichkeit von Rissen oder Brüchen im Gewindegrund ist dadurch deutlich reduziert.

Die FIG 14 bis FIG 22 zeigen nun ein Werkzeug zum Herstellen eines Kugelgewindes. Im Unterschied zu der Ausführungsform des Werkzeuges gemäß den FIG 1 bis FIG 7 ist bei dieser Ausführungsform ein eher kugelförmiges Gewindeprofil im Werkstück zu erzeugen, was durch entsprechend kugelförmige Wirkprofile der Gewindefräszähne und der Gewindefurchzähne erreicht wird. Der grundsätzliche Aufbau des Werkzeugs ist vergleichsweise ähnlich wie in den FIG 1 bis FIG 7.

In der Ausführungsform gemäß FIG 14 sind ebenso wie in FIG 1 und FIG 2 gerade Spannuten 22 und 23 im Schaft 26 des Werkzeugs 20 erzeugt, die die einzelnen Rillen der Gewindeerzeugungsbereiche 10 bis 18 in zwei Teilbereiche trennen. Die Rillen der Gewindeerzeugungsbereiche 10 bis 18 bilden wieder an einer Seite der Spannuten 22 und 23 Gewindefräszähne 2' und 4', die einerseits seitlich durch Freischliffe 24' in ihrem Querschnitt vermindert sind gegenüber dem ursprünglich kreisförmigen Querschnitt der Rillen und andererseits am Zahnkopf über einen Freischliff 21 ebenfalls in ihrer radialen Ausdehnung vermindert sind und darüber hinaus durch die Freischliffe 21 und 24' eine gegenüber der Kreisform abgewandelte annähernd polygonale Form zur Bildung wenigstens annähernd gerader Schneiden aufweisen. Im nicht freigeschliffenen Bereich der Rillen der Gewindeerzeugungsbereiche 10 bis 18 sind an den äußersten Bereichen mit dem größten Außenradius R wieder Gewindeformzähne 1' und 3' angeordnet. Die Rillen verlaufen zu den Gewindeformzähnen 1' und 3' unter einer konvexen Krümmung im Unterschied zu FIG 1 bis FIG 4, bei der die Rillen annähernd gerade verlaufen.

Ebenso wie das Werkzeug gemäß den FIG 1 bis FIG 7 ist auch das Werkzeug gemäß den FIG 13 bis FIG 17 drehsymmetrisch mit einer zweizähligen Drehsymmetrie ausgebildet, das heißt es geht bei Drehung um 180° und 360° jeweils kongruent oder deckungsgleich in sich selbst über. Es ist natürlich allgemein auch eine n-zählige Symmetrie möglich mit der natürlichen Zahl n.

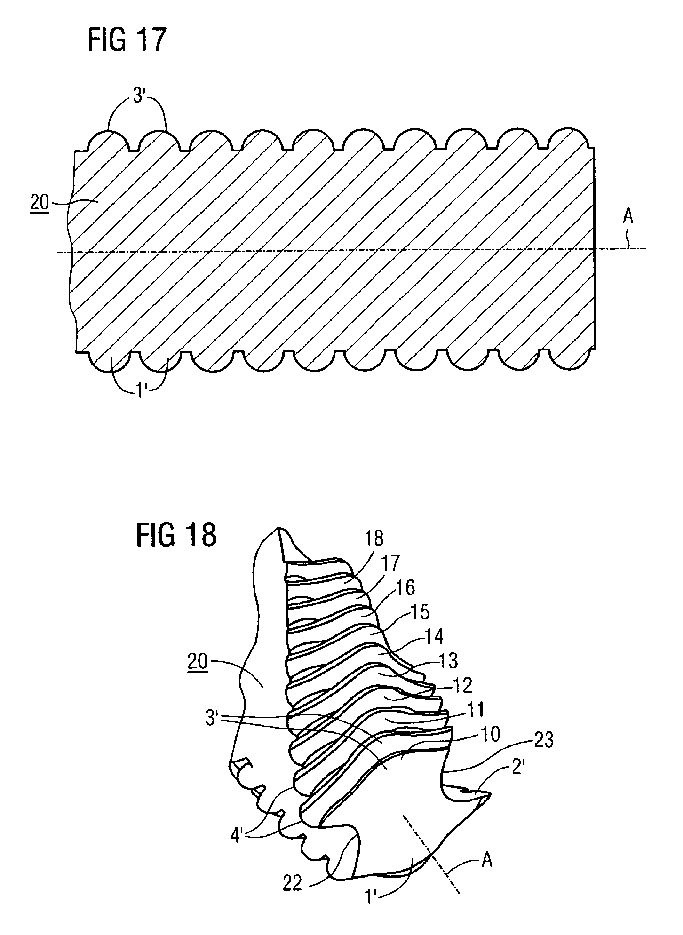

In FIG 18 ist ein Werkzeug zum Erzeugen von Kugelgewinden dargestellt, bei dem im Unterschied zu FIG 14 die Spannuten und die Anordnung der Gewindeformzähne und Gewindefräszähne unterschiedlicher Gewindeerzeugungsbereiche jeweils gedrallt sind, das heißt nicht parallel zu der Werkzeugachse A verlaufen, sondern unter einem Winkel zu der Werkzeugachse A oder unter einer spiralförmigen oder schraubenförmigen Drehung oder Drall um die Werkzeugachse A. Die Gewindeformzähne 1' und 3' sowie die Gewindefräszähne 2' und 4' benachbarter Gewindeerzeugungsbereiche z.B. 10 und 11 oder 11 und 12 usw. sind somit jeweils gegeneinander in Umfangsrichtung versetzt.

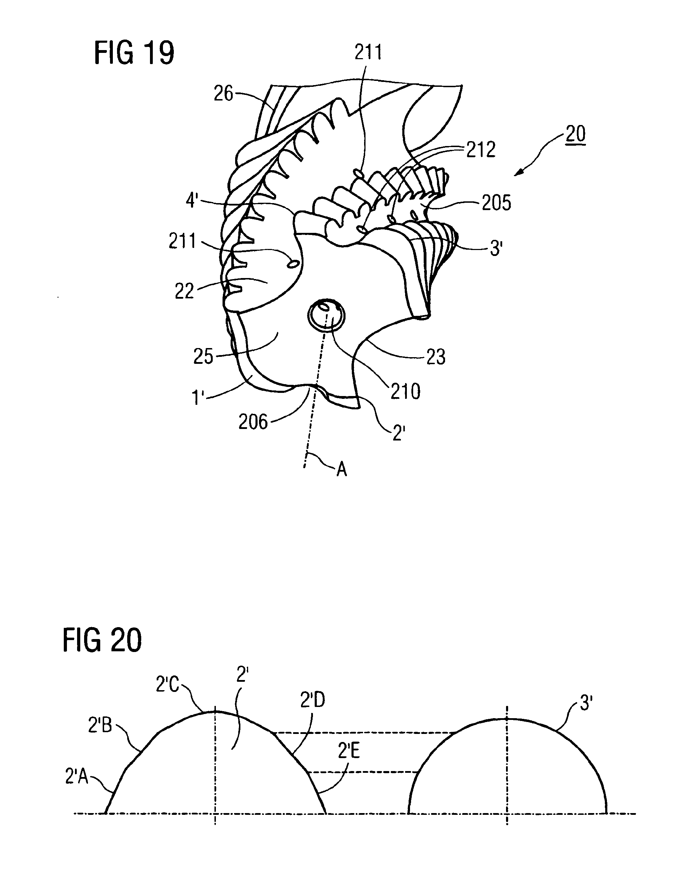

FIG 19 zeigt ein Werkzeug, bei dem ausgehend von der Ausführungsform gemäß FIG 18 zusätzlich jeweils eine gedrallte Trennnut 205 zwischen den Gewindefräszähnen 4' und den Gewindefoxmzähnen '3' und 206 zwischen den Gewindefräszähnen 4' und den Gewindeformzähnen 3' ausgebildet ist zur Entlastung der Gewindeformzähne. Über in diese Trennnuten 205 und 206 mündende innere Kanäle 212 wird ein fluides Medium, insbesondere eine Öl-Wasser-Emulsion und/oder Druckluft, zum Kühlen und/oder Schmieren und/oder zur Spanabfuhr. Zu dem gleichen Zweck sind vorzugsweise auch in den Spannuten 22 und 23 Auslässe von inneren Kanälen 211 vorgesehen und/oder an der Stirnseite 25 ein zentraler Auslass eines zentralen Kanals 210.

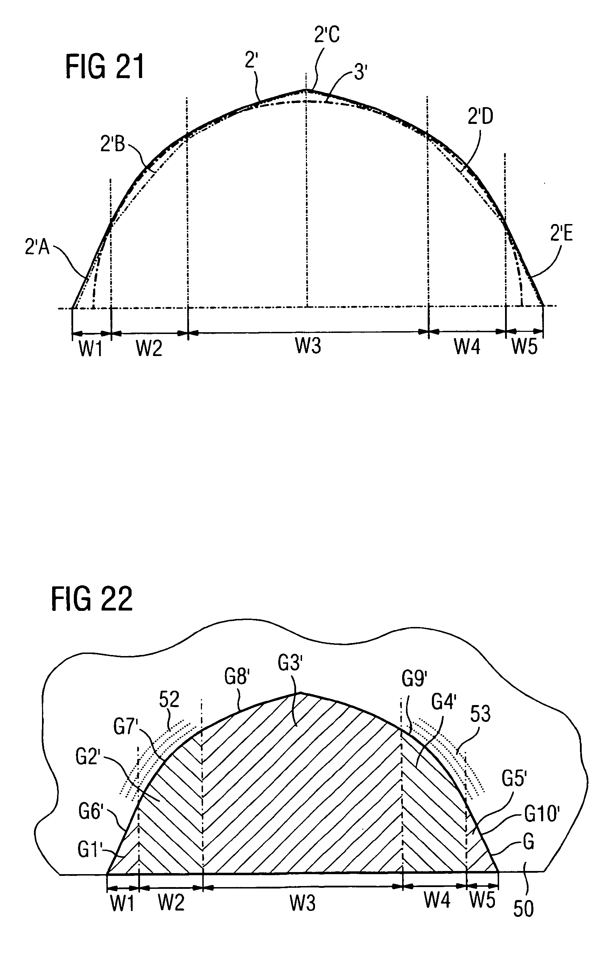

Die Gewindeformzähne 1' und 3' sowie die Gewindefräszähne 2' und 4' haben insbesondere die in FIG 20 anhand des Gewindefräszahnes 2' und des Gewindeformzahnes 3' dargestellten Zahnprofile, die in FIG 21 in einer gemeinsamen Darstellung als überlagertes Wirkprofil dargestellt sind. Der Gewindefräszahn 2' weist einen zentralen Kopfbereich 2'C auf und zwei äußere Flankenbereiche 2'A und 2'E sowie jeweils dazwischen angeordnete nach innen tretende Flankenbereiche 2'B und 2'D. Der Gewindeformzahn 3' ist im Wesentlichen kreisrund ausgebildet.

Das Wirkprofil jedes Gewindeerzeugungsbereiches 10 bis 18 entsteht wieder durch die rotatorische Überlagerung der Profile von Fräszähnen 2' und 4' und Formzähnen 1' und 3'. Das Wirkprofil setzt sich zusammen aus zwei äußeren Wirkprofilbereichen der axialen Längen W1 und W5, in denen das Profil des Gewindefräszahnes 2' weiter nach außen ragt und somit das wirksame Profil ist, zwei jeweils zur Mitte hin anschließenden Wirkprofilbereichen der axialen Längen W2 und W4, in denen das Furchprofil des Gewindeformzahnes 3' weiter nach außen ragt und somit das wirksame Profil ist und einem mittleren Wirkprofilbereich der Länge W3, in dem wieder der Gewindefräszahn 2' das wirksame Profil bildet oder darstellt.

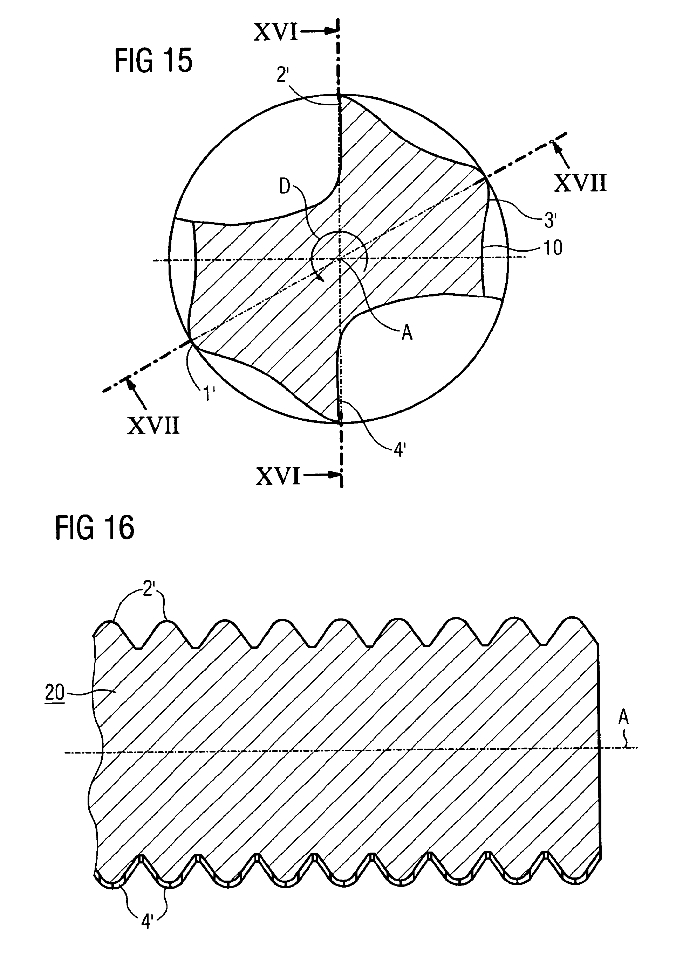

Das Ergebnis der Gewindeerzeugung mit dem Gewindewerkzeug gemäß FIG 15 bis FIG 21 bei einer Zirkularbewegung ist in FIG 22 für einen Längsschnitt eines Gewindeganges dargestellt. Das Wirkprofil bildet sich in dem Werkstück 50 durch entsprechend gefräste oder gefurchte Gewindebereiche und Gewindeprofilbereiche ab.

Das gesamt Gewindeprofil G' in dem Werkstück 50 setzt sich also zusammen aus zwei äußeren Flankenbereichen G6' und G10', die durch Fräsen mit einem Fräszahn erzeugt sind und entsprechend die Länge W1 bzw. W5 aufweisen. Die gefrästen Bereiche sind mit einer Schraffierung von links unten nach rechts oben gekennzeichnet und die geformten oder gefurchten Bereiche mit einer Schraffierung von links oben nach rechts unten und die endgültigen Gewindeprofilflächen, die geschnitten oder gefräst sind, sind mit einer durchgezogenen Linie dargestellt und die geformten Profilflächen mit einer Strich-Punkt-Linien. Gefräst sind die Gewindeprofilbereiche G6' und G10' mit den davor liegenden frei geschnittenen Raumbereichen G1' und G5' der Längen W1 bzw. W5 und der mittlere Gewindeprofilbereich G8' mit dem darunter liegenden freigeschnittenen Bereich G3' der Länge W3. Ausschließlich geformt sind dagegen die Gewindeprofilbereiche G7' und G9' mit den darunter liegenden freigeformten Bereichen G2' bzw. G4' der Länge W2 bzw. W4. Die Längen W1 und W5 sowie W2 und W4 können jeweils gleich sein oder auch unterschiedlich.

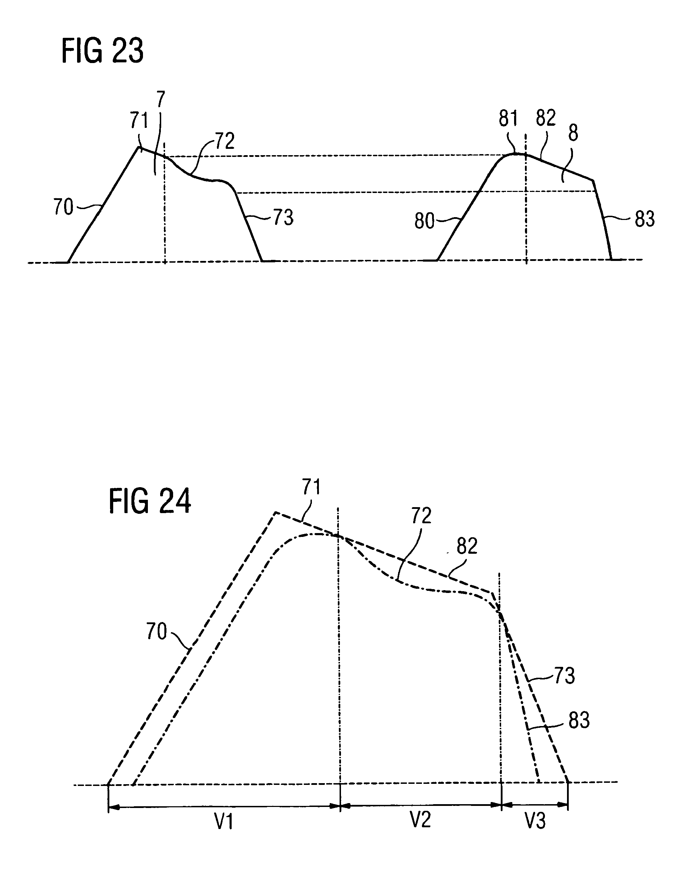

Die FIG 23 bis FIG 25 zeigen ein Sonderprofil mit einer asymmetrischen Gestalt, das beispielsweise zum Erzeugen eines selbstsichernden Gewindes (Self-Lock-Gewinde) gemäß *EMUGE-Handbuch, Seite 294,* geeignet ist.

FIG 23 zeigt nebeneinander einen Gewindefräszahn und einen Gewindeformzahn, deren überlagertes oder zusammengesetztes Wirkprofil in FIG 24 dargestellt ist. Das resultierende Wirkprofil gemäß FIG 24 setzt sich zusammen aus den Profilbereichen 70 und 71 des Gewindefräszahnes 7 und den Formbereichen 82 und 83 des Gewindeformzahnes 8. Die weiteren Profilbereiche 72 und 73 des Gewindefräszahnes sowie 80 und 81 des Gewindeformzahnes 8 bleiben dagegen aufgrund ihrer geringeren Ausdehnung nach außen unwirksam. Die Länge des wirksamen linken Fräsprofils aus den Fräsprofilbereichen 70 und 71 ist mit V1 und des rechten Gewindefräsprofilbereiches 73 mit V3 bezeichnet, während die Länge des wirksamen Formprofils 82 mit V2 bezeichnet ist. Das Wirkprofil gemäß FIG 24 entsteht wieder durch rotatorische Überlagerung der beiden Profile von Fräszahn 7 und Furchzahn 8 und setzt sich zusammen aus den wirksamen Außenbereichen 70, 71, 73 und 82 des jeweils weiter außen liegenden Profils.

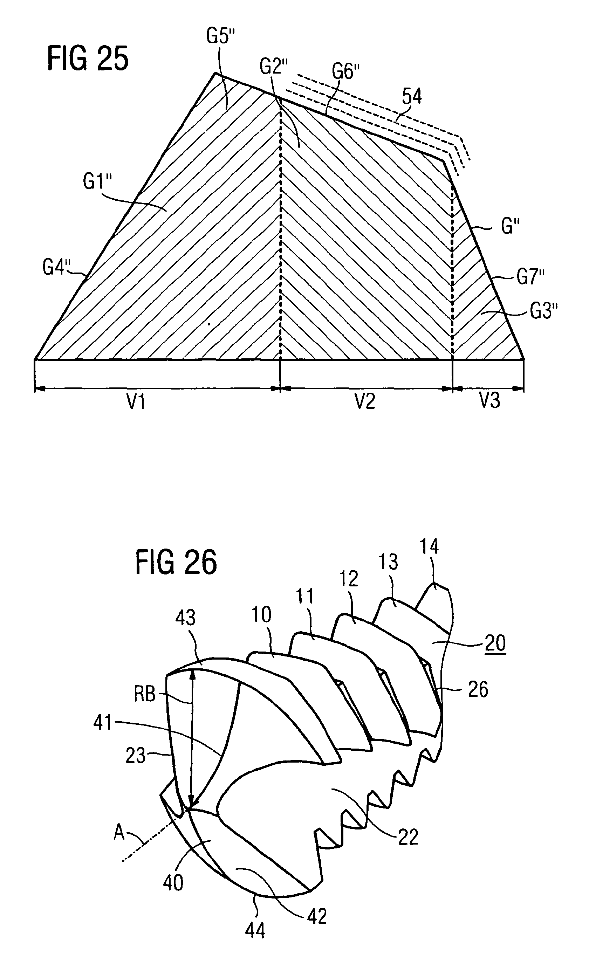

FIG 25 zeigt nun das entsprechend hergestellte Gewinde G" im Werkstück 50 im Längsschnitt. Das Gewinde G" setzt sich zusammen aus einem gefrästen herausgearbeiteten Gewindebereich G1", der von einem eine Gewindeflanke bildenden Gewindeteilprofil G4" links und einem unter einem Winkel zu diesem Teilprofil G4" schräg nach unten verlaufenden Gewindeteilprofil G5" zum Werkstück 50 hin begrenzt ist. An der rechten Flanke ist ebenfalls ein gefrästes Gewindeteilprofil G7" erzeugt mit einem gefräst abgetragenen Gewindebereich G3". Zwischen diesen beiden gefrästen Gewindebereichen der Längen V1 und V3 ist ein mittlerer, geformter Gewindebereich G2", der zum Werkstück 50 hin von dem Gewindeteilprofil G6" begrenzt wird durch Formen spanlos erzeugt. Entsprechend ist das Material des Werkstücks an dem Gewindeteilprofil G6" in einem Bereich 54 verdichtet oder verfestigt. Die Verfestigung 54 resultiert dabei durch eine Verformung über die gesamte Gewindehöhe oder Einarbeitungstiefe von der Gewindebasis bis zu dem Gewindeteilprofil G6", da der gesamte Bereich G2" geformt wird und nicht etwa durch einen der Fräszähne vorher teilweise ausgeschnitten worden ist. Durch diese Verfestigung erreicht man für die in diesem schrägen Gewindeteilprofil G6" anliegende Keilfläche der Schraube oder des Schraubbolzens eine besonders hohe elastische Rückstellkraft zur Selbstsicherung.

In FIG 26 ist nun ein kombiniertes Werkzeug dargestellt, bei dem ausgehend von einem Werkzeug gemäß FIG 1 und 2 zunächst das Werkzeug gedrallt wurde, indem die Nuten 22 und 23 gedrallt wurden und auch die dazwischenliegenden Gewindeerzeugungsbereich 10 bis 15 und die nicht dargestellten weiteren Gewindeerzeugungsbereiche und deren Gewindeformzähne 1 und 3 sowie deren Gewindefräszähne 2 und 4 ebenfalls auf einer gedrallten Kurve verlaufen.

Ferner ist an der Stirnseite oder dem freien Ende des Werkzeugs eine Bohrspitze 40 ausgebildet mit stirnseitigen Bohrschneiden 41 und 42 und umfangsseitigen Bohrschneiden 43 und 44. Die Nuten 22 und 23 verlaufen bis zur Bohrspitze 40, um die beim Bohren entstehenden Bohrspäne des Materials abführen zu können. Mit dem in FIG 26 dargestellten Werkzeug wird zunächst eine Vorbohrung für ein Innengewinde durch eine axiale Vorschubbewegung unter Drehung des Werkzeugs 20 in der durch die Anordnung der Schneiden 41 und 42 des Bohrteils 40 festgelegten Drehrichtung, im Ausführungsbeispiel gemäß FIG 26 im Uhrzeigersinn, also rechtsdrehend, um die Werkzeugachse A erzeugt. Die Bohrschneiden ragen entsprechend radial weiter nach außen als die Gewindeerzeugungs- oder Gewindeerzeugungsbereiche 10 bis 14. Der Außenradius RB des Bohrteils 40 ist also größer als der Außenradius R der Gewindeerzeugungs- oder Gewindeerzeugungsbereiche 10 bis 14. Dadurch ist der Kerndurchmesser oder der Innendurchmesser der mit dem Bohrteil 40 erzeugten Bohrung größer als der Außendurchmesser des gewindeerzeugenden Bereichs des Werkzeugs 20. Nach der Erzeugung der Bohrung durch die axiale Bohrbewegung in das Werkstück wird nun das Werkzeug 20 radial zur Werkzeugachse A zur Innenwand der erzeugten Bohrung des Werkstücks zugestellt und mit den Gewindeerzeugungsbereichen 10 bis 14 wird in der bereits beschriebenen Art und Weise durch Zirkularformen und Zirkularfräsen das Gewinde erzeugt. Bei einer nicht durchgehenden Bohrung (Sacklochbohrung) erzeugt bei dieser Zustellbewegung das Bohrteil mit seinen Umfangsschneiden 43, 44 einen radial weiter nach außen ragenden Endbereich oder Abschlussbereich des Gewindes, bei einer durchgehenden Bohrung oder einer durchgehenden Öffnung kann auch das Bohrteil sich bei der Erzeugung des Gewindes bereits außerhalb des Werkstücks befinden.

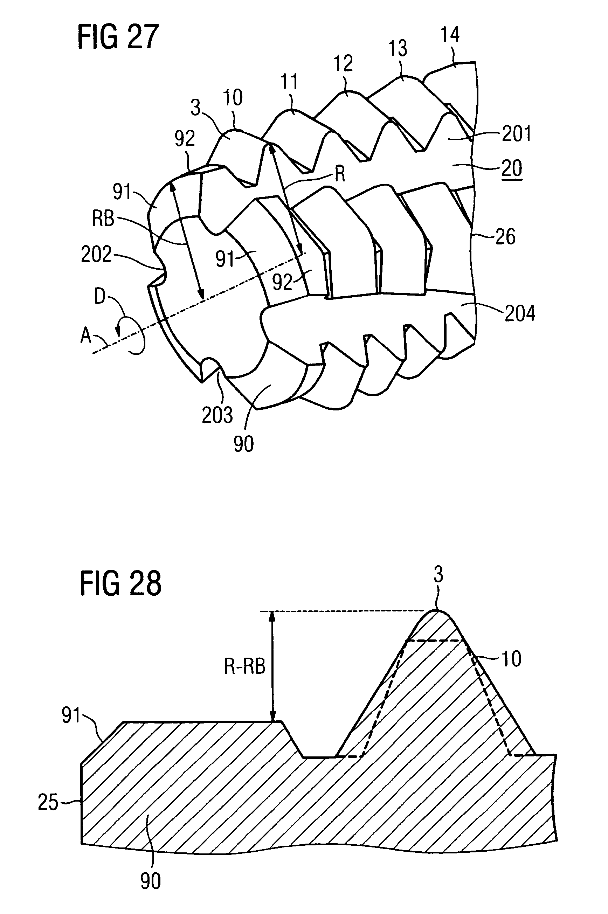

FIG 27 zeigt nun ein kombiniertes Bohr- und Gewindeerzeugungswerkzeug, bei dem mit einer einzigen Arbeitsbewegung oder einem einigen Arbeitsschritt nach dem Zirkularverfahren im Vollmaterial des Werkstücks zugleich die Bohrung und das Innengewinde in der Bohrung erzeugt werden können.

Dazu weist das kombinierte Werkzeug 20 ein an der dem vorderen Ende angeordnetes Bohrteil 90 auf, das durch bis an die Stirnseite 25 des Werkzeugs 20 verlaufende und dort mündende vier Spannuten 201 bis 204 in vier Teilbereich getrennt ist, in denen jeweils eine stirnseitige Bohrschneide 91 und eine umfangsseitige Bohrschneide 92 angeordnet sind. Der Außendurchmesser RB des Bohrteils 90 ist in diesem Fall geringer als der Außenradius R des Gewindeerzeugungsbereichs, da die Gewindeformzähne und Gewindefurchzähne der Gewindeerzeugungsbereiche mit der gleichen Bewegung in die vom Bohrteil 90 vorerzeugte Oberfläche des Werkstücks noch das Gewinde einarbeiten müssen und dafür ausreichend Material oder ein ausreichender Außenumfang des Materials übrigbleiben muss. Die vier Spannuten 201 bis 204 trennen auch die Gewindeerzeugungsbereiche, von denen 10 bis 14 dargestellt sind, so dass die Gewindeerzeugungsbereiche 10 bis 14 jeweils vier nicht näher bezeichnete Gewindeformzähne und vier Gewindefräszähne aufweisen, insbesondere mit einer vierzähligen Symmetrie.

In FIG 28 ist in einem Längsschnitt der vordere Bereich des Werkzeugs gemäß FIG 27 gezeigt. Der Unterschied zwischen den radialen Abmessungen ist durch den Differenzbetrag R - RB zwischen dem Gewindefurchzahn 3 und der Umfangsschneide 92 verdeutlicht.

In dem Ausführungsbeispiel gemäß FIG 27 und 28 weisen die Gewindeerzeugungsbereiche 10 bis 14 jeweils vier Gewindeformzähne und vier Gewindefräszähne auf und sind mit einer vierzähligen Drehsymmetrie ausgebildet. Die Spannuten und die Gewindeerzeugungsbereiche 10 bis 14 sind unter einem Drall angeordnet, was die ruhigere Laufeigenschaften bringt und den Span in der Drehrichtung des Werkzeugs 20 besser abführt.

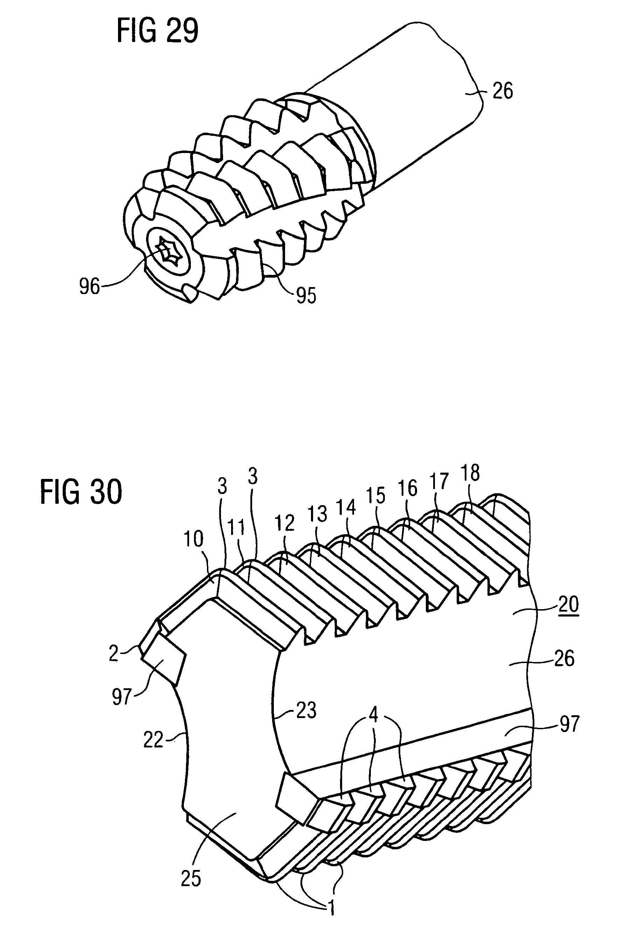

Die FIG 29 zeigt ein Werkzeug mit einem wie in FIG 27 und 28 ausgebildeten, aus Bohrteil und Gewindeerzeugungsteil zusammengesetzten Arbeitskopf 95, der als vorgefertigtes Teil auf den Schaft 26 aufgesetzt oder an dessen Stirnseite befestigt wird, im Beispiel der FIG 29 mittels einer Schraube 96 oder Schraubverbindung.

FIG 30 zeigt eine abgewandelte Ausführungsform eines Werkzeugs gemäß FIG 1 und 2, bei der die Fräszähne 2 und 4 nicht einstückig zusammen mit den Gewindefurchzähnen 3 und 4 in einem Material des Schaftes 26 erzeugt sind, sondern als vorgefertigte Teile an dem mit Gewindeformzähnen vorgefertigten Schaft befestigt sind. Im Ausführungsbeispiel gemäß FIG 30 sind die einzelnen Gewindefräszähne an einem gemeinsamen Fräselement 97, das in Form einer Leiste oder eines Frässteges ausgebildet ist, angeordnet. Dieses leistenförmige Fräselement 97 wird in eine entsprechende Aufnahme in dem Schaft 26 eingesetzt und dort befestigt, insbesondere materialschlüssig, beispielsweise durch Löten, oder auch kraft- und/oder formschlüssig, beispielsweise durch Klemmen oder Schrauben, befestigt. Die Gewindeerzeugungsbereiche 10 bis 18 sind in diesem Ausführungsbeispiel also aus drei vorgefertigten Teilen gebildet oder zusammengesetzt.

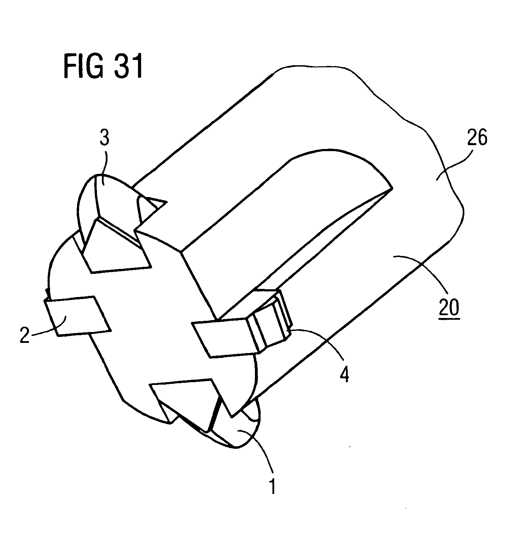

FIG 31 zeigt ein Ausführungsbeispiel, bei der sowohl die Gewindefräszähne als auch die Gewindefurchzähne einzeln als vorgefertigte Teile oder in vorgefertigten Elementen vorgesehen sind und in entsprechenden Aufnahmen des Werkzeugschaftes 26 aufgenommen und dort befestigt sind. Im Ausführungsbeispiel gemäß FIG 31 ist nur ein Gewindeerzeugungsbereich mit vier in Umfangsrichtung um 90° versetzt zueinander aufeinanderfolgend angeordneten vorgefertigten Teilen vorgesehen, wobei zwei vorgefertigte Teile jeweils einen Fräszahn 2 bzw. 4 tragen und zwei vorgefertigte Teile jeweils einen Furchzahn 1 bzw. 3.

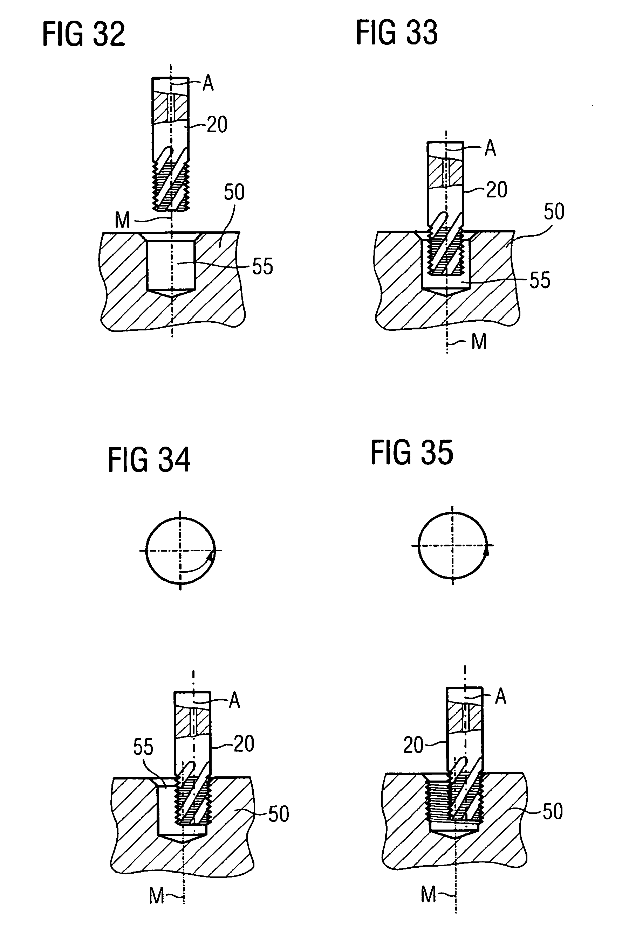

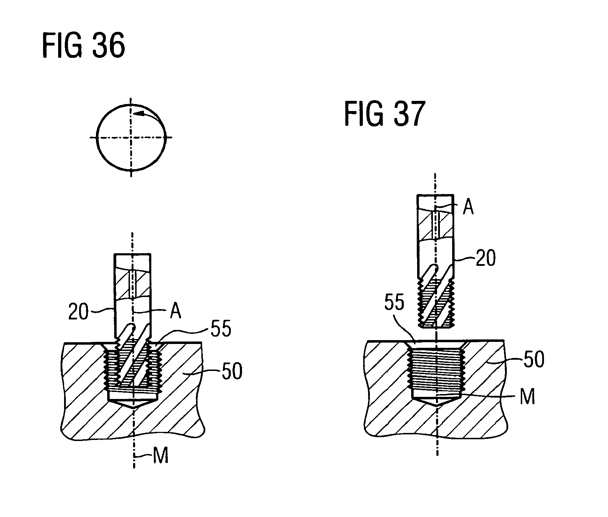

In den FIG 32 bis 37 ist ein typisches Arbeitsverfahren mit einem Werkzeug 20 gemäß der Erfindung dargestellt. Zunächst wird das Werkzeug 20 mit seiner Werkzeugachse A koaxial zu einer Mittelachse M einer Bohrung 55 im Werkstück 50 positioniert. Von dieser Ausgangsposition wird das Werkzeug 20 nun mit einer linearen Vorschubbewegung axial zur Werkzeugachse A und Mittelachse M in die Bohrung 55 im Werkstück 50 eingeführt, insbesondere auf die Gewindetiefe eingetaucht. Nun wird mit einem Einfahrradius das Werkzeug 20 gemäß FIG 34 zur Innenwand der Bohrung 55 radial zugestellt. Gemäß FIG 35 wird das Werkzeug 20 nun mit einer sich aus der Zahl der Gewindeerzeugungsbereiche oder Gewindeerzeugungsbereiche einerseits und der zahl der gewünschten Gewindeumläufe andererseits ergebenden Zahl von Umläufen seiner Werkzeugachse A um die Mittelachse M in einer Zirkularbewegung bei gleichzeitiger Vorschubbewegung parallel zur Werkzeugachse A bewegt. Dadurch erzeugt das Werkzeug 20 in der Innenwand der Bohrung 55 ein Innengewinde mit einer Steigung, die sich aus der Vorschubgeschwindigkeit und der Beabstandung der einzelnen Gewindeerzeugungsbereiche des Werkzeugs 20 ergibt. Nach dieser schraubenförmigen Arbeitsbewegung gemäß FIG 35 wird nun gemäß FIG 36 das Werkzeug 20 wieder radial zur Mitte gestellt, so dass die Werkzeugachse A und die Mittelachse M wieder koaxial zueinander sind. Für diese Zurückfahrbewegung ist wieder ein Ausfahrradius vorgesehen.

Wie in FIG 37 dargestellt wird in einer axialen Rückholbewegung, das Werkzeug 20 aus der Bohrung 55 axial zur Mittelachse M herausbewegt zurück in seine Ausgangsposition. Nun kann ein neues Gewinde in einem anderen Werkstück oder an einer anderen Stelle desselben Werkstücks 50 erzeugt werden. Die Mittelachse M des erzeugten Innengewindes in der Bohrung 55 fällt mit der Mittelachse der Zirkularbewegung des Werkzeugs 20 während der Arbeitsbewegung in FIG 35 zusammen. In den meisten Anwendungen wird das Werkzeug, meist nach Erzeugen des Gewindes, in einer entgegen der Vorschubrichtung gerichteten Rückholrichtung wieder aus dem Werkstück zurückgeholt oder zurückgefahren, um ein neues Werkstück bearbeiten zu können. Dabei wird das Werkzeug meist weiterhin um seine Werkzeugachse gedreht, um keine Bearbeitungszeit für das Anfahren des Drehantriebs zu verlieren.

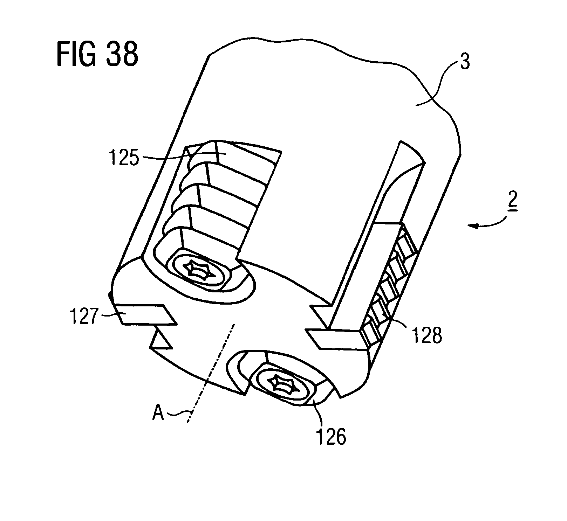

FIG 38 zeigt ein Werkzeug 2 mit zwei um 180° zueinander versetzten Formzahnanordnungen 125 und 126 mit jeweils fünf nach außen zeigenden Formzähnen und zwei dazu jeweils um 90° versetzten Fräszahnanordnungen 127 und 128 mit jeweils fünf Fräszähnen, wobei jeweils ein Formzahn und ein Fräszahn jeder Anordnung 125 bis 128 auf gleicher axialer Höhe angeordnet sind. Die Formzahnanordnungen 125 und 126 und die Fräszahnanordnungen 127 und 128 sind jeweils vorgefertigte Teile, die jeweils in einer Ausnehmung im Schaft 3 befestigt sind. Die Fräszahnanordnungen 127 und 128 sind als axiale Leisten ausgebildet und neben Spannuten im Schaft 3 angeordnet. Die Formzahnanordnungen 127 und 128 weisen fünf als Wendeelemente ausgebildete Elemente mit jeweils vier Formzähnen auf, von denen jeder durch Drehung der Formzahnanordnung 125 und 126 oder der Wendelemente um deren Mittelachse oder die Schraubenachse einer Befestigungsschraube verwendet werden kann.

In allen Ausführungsformen kann auch eine andere Reihenfolge von Formzähnen und Fräszähnen in einem Gewindeerzeugungsbereich gewählt werden. Insbesondere können in Umfangsrichtung oder Drehrichtung auch wenigstens zwei Formzähne und/oder wenigstens zwei Fräszähne unmittelbar aufeinander folgen ohne dazwischen geschalteten Fräszahn bzw. Formzahn. Man kann dann die unmittelbar aufeinander folgenden Formzähne oder Fräszähne als einen gemeinsamen Gewindeformbereich bzw. Gewindefräsbereich auffassen oder auch als einzelne Gewindeform- bzw. -fräsbereiche.

### Bezugszeichenliste

- 1: Gewindeformzahn
- 1A, 1B: Zahnflanken
- 1C: Zahnkopf
- 2: Gewindefräszahn
- 2A, 2B: Zahnflanken
- 2C: Zahnkopf
- 3: Gewindeformzahn
- 4: Gewindefräszahn
- 7: Gewindefräszahn
- 8: Gewindeformzahn
- 10A: Teilbereich
- 10B: Teilbereich
- 10 bis 18: Gewindeerzeugungsbereiche
- 20: Werkzeug
- 21: Freischliff
- 22, 23: Nut
- 25: Stirnseite
- 24: Freischliffe
- 26: Werkzeugschaft
- 40: Bohrspitze
- 41, 42: stirnseitige Bohrschneiden
- 43, 44: umfangsseitige Bohrschneiden
- 50: Werkstück
- 51: umgebender Bereich
- 54: Verfestigung
- 55: Bohrung
- 70, 71: Fräsprofilbereiche
- 73: Gewindefräsprofilbereich
- 82, 83: Formbereiche
- 90: Bohrteil
- 91: stirnseitige Bohrschneide
- 92: umfangsseitige Bohrschneide
- 95: Arbeitskopf
- 96: Schraube
- 97: Frässteg
- 125, 126: Formzahnanordnung
- 127,128: Fräszahnanordnung
- 201, 204: Spannuten
- A: Werkzeugachse
- D: Drehsinn
- M: Mittelachse
- R: Außenradius
- Ri: Innenradius des Gewindes
- Ra: Außenradius des Gewindes
- L1,L3: Länge
- L2: Länge
- G: Gewinde
- G': Gewindeprofil
- G1, G1': Gewindebereich
- G2, G2': Gewindebereich
- G3, G3': Gewindebereich
- G4, G5: Gewindeflanken
- G6: Gewindegrund
- P1, P2: Schnittpunkte
- VB: Vorschubbewegung
- ZB: Zirkularbewegung

## Patentansprüche

1. Werkzeug zur Erzeugung eines Gewindes (G) in einem Werkstück (50), umfassend
a) wenigstens einen Gewindeerzeugungsbereich (10 bis 18), der
a1) wenigstens einen spanabhebend arbeitenden Gewindefräsbereich (2, 4) sowie
a2) wenigstens einen spanlos arbeitenden Gewindeformbereich (1, 3) umfasst,
b) wobei wenigstens ein Gewindefräsbereich und wenigstens ein zugehöriger Gewindeformbereich wenigstens eines Gewindeerzeugungsbereiches
b1) so miteinander gekoppelt oder verbunden sind, dass sie gemeinsam um eine Werkzeugachse (A) drehbar oder drehend sind, und
b2) entlang eines Außenumfanges des Gewindeerzeugungsbereiches in einer Drehrichtung (D) um die Werkzeugachse (A) versetzt zueinander und/oder entlang des Außenumfanges des Gewindeerzeugungsbereiches in einer Drehrichtung (D) um die Werkzeugachse (A) hintereinander oder entlang des Außenumfanges des Gewindeerzeugungsbereiches in einer Drehrichtung (D) um die Werkzeugachse (A) aufeinander folgend angeordnet sind und/oder
b3) so angeordnet und ausgebildet sind, dass sie bei Drehung um die Werkzeugachse in einem vorgegebenen Drehsinn abwechselnd in das Werkstück eingreifen.

2. Werkzeug nach Anspruch 1, bei dem
a) das Wirkprofil jedes Gewindeerzeugungsbereiches einem vorgegebenen Nennprofil oder vorgegebenen Endprofil des zu erzeugenden Gewindes angepasst ist oder entspricht oder darauf abbildbar ist,
b) wobei das Wirkprofil jedes Gewindeerzeugungsbereiches dem Profil der Drehprojektion aller Gewindefräsbereiche und aller Gewindeformbereiche dieses Gewindeerzeugungsbereiches um die Werkzeugachse auf eine durch die Werkzeugachse verlaufende Projektionsebene entspricht.

3. Werkzeug nach Anspruch 1 oder Anspruch 2, bei dem wenigstens ein Gewindeerzeugungsbereich mehrere Gewindefräsbereiche und/oder mehrere Gewindeformbereiche aufweist und die Drehprojektionen von wenigstens zwei und vorzugsweise allen dieser Gewindefräsbereiche und/oder die Drehprojektionen von wenigstens zwei und vorzugsweise allen dieser Gewindeformbereiche um die Werkzeugachse auf eine oder die genannte durch die Werkzeugachse verlaufende Projektionsebene identisch zueinander sind oder verschieden voneinander sind.

4. Werkzeug nach einem der vorhergehenden Ansprüche, bei dem der bzw. die Gewindefräsbereich(e) und der bzw. die Gewindeformbereich(e) des wenigstens einen Gewindeerzeugungsbereiches bei einer Arbeitsbewegung des Werkzeugs, die eine Drehbewegung des Werkzeugs um die Werkzeugachse in einem vorgegebenen Drehsinn, eine gleichzeitige axiale Vorschubbewegung des Werkzeugs axial zur Werkzeugachse und eine gleichzeitige Drehbewegung der Werkzeugachse des Werkzeugs um eine nicht durch das Werkzeug verlaufende und parallel zur Werkzeugachse angeordnete Mittelachse umfasst, gemeinsam das Gewindeprofil des Gewindes erzeugen.

5. Werkzeug nach einem der vorhergehenden Ansprüche, bei dem
a) in wenigstens einem, vorzugsweise jedem, Gewindeerzeugungsbereich die Wirkprofile von Gewindefräsbereich(en) und Gewindeformbereich(en) so aufeinander abgestimmt sind, dass
a1) wenigstens ein erster Teilbereich des Wirkprofils des gesamten Gewindeerzeugungsbereiches ausschließlich von dem Wirkprofil des oder aller Gewindeformbereiche(s) gebildet ist und
a2) wenigstens ein zweiter Teilbereich des Wirkprofils des gesamten Gewindeerzeugungsbereiches ausschließlich von dem Wirkprofil des oder aller Gewindefräsbereiche(s) gebildet ist.
b) wobei das Wirkprofil jedes Gewindefräsbereichs oder jedes Gewindeformbereich der Drehprojektion dieses Gewindefräsbereichs oder dieses Gewindeformbereichs um die Werkzeugachse auf eine durch die Werkzeugachse verlaufende Projektionsebene entspricht.

6. Werkzeug nach Anspruch 5, bei dem
a) als von dem Wirkprofil des oder aller Gewindeformbereiche(s) gebildeter erster Teilbereich des Wirkprofils des gesamten Gewindeerzeugungsbereiches ein zentraler Teilbereich und als von dem Wirkprofil des oder aller Gewindefräsbereiche(s) gebildete zweite Teilbereiche des Wirkprofils des gesamten Gewindeerzeugungsbereiches zwei an beiden Seiten des zentralen Teilbereichs sich anschließende Teilbereiche vorgesehen sind und/oder
b) als von dem Wirkprofil des oder aller Gewindefräsbereiche(s) gebildeter zweiter Teilbereich des Wirkprofils des gesamten Gewindeerzeugungsbereiches ein zentraler Teilbereich und als von dem Wirkprofil des oder aller Gewindeformbereiche(s) gebildete erste Teilbereiche des Wirkprofils des gesamten Gewindeerzeugungsbereiches zwei an beiden Seiten des zentralen Teilbereichs sich anschließende Teilbereiche vorgesehen sind und/oder
c) sich an die an den zentralen Teilbereich des Wirkprofils des gesamten Gewindeerzeugungsbereiches sich anschließenden Teilbereiche des Wirkprofils des gesamten Gewindeerzeugungsbereiches sich an den von dem zentralen Teilbereich abgewandten Seiten weitere Teilbereiche des Wirkprofils des gesamten Gewindeerzeugungsbereiches anschließen, die von dem Wirkprofil des oder aller Gewindeformbereiche(s) oder des oder aller Gewindefräsbereiche(s) gebildet sind.

7. Werkzeug nach einem der vorhergehenden Ansprüche, bei dem in wenigstens einem, vorzugsweise jedem, Gewindeerzeugungsbereich ein Teilbereich des Wirkprofils jedes Gewindefräsbereiches innerhalb des Wirkprofils wenigstens eines Gewindeformbereiches, vorzugsweise jedes Gewindeformbereiches, liegt und ein Teilbereich des Wirkprofils jedes Gewindeformbereiches innerhalb des Wirkprofils wenigstens eines Gewindefräsbereiches, vorzugsweise jedes Gewindefräsbereiches, liegt.

8. Werkzeug nach einem der vorhergehenden Ansprüche, bei dem wenigstens zwei Gewindeerzeugungsbereiche vorgesehen sind, die axial zur Werkzeugachse versetzt zueinander angeordnet sind.

9. Werkzeug nach einem der vorhergehenden Ansprüche, bei dem wenigstens ein Gewindeformbereich wenigstens einen radial nach außen ragenden Formzahn, Formkeil oder Drückstollen aufweist und/oder bei dem wenigstens ein Gewindeformbereich in einem Querschnitt senkrecht zur Werkzeugachse eine von einem Teil eines, vorzugsweise regulären, Polygons abgeleitete Form aufweist, wobei das Polygon vorzugsweise eine Eckenzahl von zwei oder drei oder vier oder fünf oder sechs aufweist, wobei Eckbereiche des wenigstens annähernd polygonalen Querschnitts des Gewindeformbereichs Formzähne, Formkeile oder Drückstollen bilden, und/oder bei dem wenigstens ein Gewindeerzeugungsbereich wenigstens eine Rille oder mehrere in Drehrichtung versetzt zueinander angeordnete und durch Trennnuten voneinander getrennte Rillen, die senkrecht zur Werkzeugachse verlaufend, radial nach außen ausgebildet ist bzw. sind, aufweist, wobei an wenigstens einer oder jeder Rille wenigstens eines Gewindeerzeugungsbereiches jeweils wenigstens ein Formzahn, Formkeil oder Drückstollen ausgebildet ist, der radial weiter nach außen ragt als die umgebenden Bereiche der Rille, und/oder wobei in einer vorgegebenen Drehrichtung gesehen, an einem Endbereich wenigstens einer oder jeder Rille wenigstens eines Gewindeerzeugungsbereiches ein Gewindefräsbereich ausgebildet ist.

10. Werkzeug nach einem oder mehreren der vorhergehenden Ansprüche mit wenigstens einem zusätzlichen spanabhebenden Bereich zusätzlich zu dem oder den Gewindefräsbereich(en), wobei wenigstens ein zusätzlicher spanabhebender Bereich zum Erzeugen einer Werkstückoberfläche für das Gewinde ausgebildet und vorgesehen ist und wenigstens ein Gewindeerzeugungsbereich zum Erzeugen des Gewindes in dieser Werkstückoberfläche ausgebildet und vorgesehen ist und/oder wobei wenigstens ein zusätzlicher spanabhebender Bereich zum spanenden Erzeugen eines Vorgewindes in einer Werkstückoberfläche ausgebildet und vorgesehen ist und wenigstens ein Gewindeerzeugungsbereich zum Fertigstellen des Gewindes durch Nachbearbeiten des Vorgewindes in der Werkstückoberfläche ausgebildet und vorgesehen ist und/oder wobei wenigstens ein zusätzlicher spanabhebender Bereich ein Bohrbereich oder ein Fräsbereich ist oder wenigstens eine stirnseitige Schneide an einer Stirnseite oder einem freien Ende des Werkzeugs und/oder wenigstens eine umfangsseitige Schneide an einem Umfangsbereich des Werkzeugs aufweist oder bei dem wenigstens ein zusätzlicher spanabhebender Bereich zum Erzeugen eines, insbesondere gegenüber einem Gewindekern, vergrößerten, insbesondere gestuften oder angefasten, Eingangsbereichs oder Mündungsbereich des Gewindes ausgebildet und vorgesehen ist.

11. Werkzeug nach einem der vorhergehenden Ansprüche mit wenigstens einem zusätzlichen spanlos arbeitenden Gewindeformbereich zum Nachbearbeiten und/oder Egalisieren der Gewindegänge oder Gewindeflanken des von dem oder den Gewindeerzeugungsbereich(en) erzeugten Gewindes, wobei insbesondere ein erster spanabhebender Bereich wenigstens eine Vorarbeitsschneide zum Abtragen von Material aufweist, sich an den ersten spanabhebenden Bereich wenigstens ein Gewindeerzeugungsbereich zum Erzeugen eines Gewindes anschließt, an den wenigstens einen Gewindeerzeugungsbereich sich ein zweiter spanabhebender Bereich anschließt mit wenigstens einer Kernschneide zum Nachschneiden oder Egalisieren des Gewindekerns des vom Gewindeerzeugungsbereich erzeugten Gewindes und sich an den zweiten spanabhebenden Bereich ein zusätzlicher Gewindeformbereich zum Nachbearbeiten und/oder Egalisieren der Gewindegänge oder Gewindeflanken des von dem oder den Gewindeerzeugungsbereich(en) erzeugten Gewindes anschließt.

12. Verfahren zur Erzeugung eines Gewindes in einem Werkstück bei dem
a) ein Werkzeug nach einem oder mehreren der vorhergehenden Ansprüche
b) in einer Arbeitsbewegung bewegt wird, die
b1) eine Drehbewegung des Werkzeugs um die Werkzeugachse in einem vorgegebenen Drehsinn,
b2) eine gleichzeitige axiale Vorschubbewegung des Werkzeugs axial zur Werkzeugachse und
b3) eine gleichzeitige Zirkularbewegung des Werkzeugs, bei der die Werkzeugachse des Werkzeugs sich um eine parallel zur Werkzeugachse verlaufende zentrale Drehachse dreht, umfasst.

13. Verfahren nach Anspruch 12, bei dem zumindest während eines Teils der Arbeitsbewegung des Werkzeugs zunächst wenigstens ein Gewindeformbereich einen Teil eines Gewindeganges in dem Werkstück formend und damit spanlos erzeugt oder weiter in das Werkstück einarbeitet und anschließend wenigstens ein Gewindefräsbereich den von dem Gewindeformbereich in dem Werkstück erzeugten oder bearbeiteten Teil des Gewindegangs spanabhebend weiter bearbeitet und/oder bei dem die Werkstückoberfläche in dem von wenigstens einem Gewindeerzeugungsbereich erzeugten Gewindegang teilweise gefräst und teilweise geformt wird und/oder bei dem ein Gewindegrund des Gewindegangs im Werkstück von dem wenigstens einen Gewindeformbereich geformt wird und zwei an den Gewindegrund sich anschließende Gewindeflanken wenigstens teilweise von dem wenigstens einen Gewindefräsbereich gefräst werden und/oder bei dem ein Gewindegrund des Gewindegangs im Werkstück von dem wenigstens einen Gewindefräsbereich gefräst wird und zwei an den Gewindegrund sich anschließende Gewindeflanken wenigstens teilweise von dem wenigstens einen Gewindeformbereich geformt werden.

14. Verfahren nach Anspruch 12 oder Anspruch 13, bei dem mit dem Werkzeug bei der Arbeitsbewegung wenigstens eine der Anzahl der Gewindeerzeugungsbereiche des Werkzeugs entsprechende Zahl von Gewindeumläufen erzeugt wird.

## Claims

1. Tool for producing a thread (G) in a workpiece (50), comprising:
a) at least one thread-producing region (10 to 18) which comprises
a1) at least one thread-milling region (2, 4) which operates by removing material and also
a2) at least one thread-shaping region (1, 3) which operates without the removal of material,
b) wherein at least one thread-milling region and at least one associated thread-shaping region of at least one thread-producing region
b1) are coupled or connected to one another in such a way that they are rotatable or rotate together about a tool axis (A), and
b2) are arranged offset from one another along an outer circumference of the thread-producing region in a direction of rotation (D) about the tool axis (A) and/or one behind the other along the outer circumference of the thread-producing region in a direction of rotation (D) about the tool axis (A) or following one another along the outer circumference of the thread-producing region in a direction of rotation (D) about the tool axis (A) and/or
b3) are arranged and embodied in such a way that they alternately engage with the workpiece during rotation about the tool axis in a predefined direction of rotation.

2. Tool according to claim 1, wherein:
a) the effective profile of each thread-producing region is adapted to or corresponds to or can be mapped onto a predefined nominal profile or predefined final profile of the thread to be produced,
b) the effective profile of each thread-producing region corresponding to the profile of the rotational projection of all thread-milling regions and all thread-shaping regions of this thread-producing region about the tool axis onto a projection plane extending through the tool axis.

3. Tool according to claim 1 or claim 2, wherein at least one thread-producing region comprises a plurality of thread-milling regions and/or a plurality of thread-shaping regions and the rotational projections of at least two and preferably all of these thread-milling regions and/or the rotational projections of at least two and preferably all of these thread-shaping regions about the tool axis onto a or the aforementioned projection plane extending through the tool axis are identical to one another or are different from one another.

4. Tool according to one of the preceding claims, wherein the thread-milling region(s) and the thread-shaping region(s) of the at least one thread-producing region together produce the thread profile of the thread, during a working movement of the tool that comprises a rotational movement of the tool about the tool axis in a predefined direction of rotation, a simultaneous movement of axial advancement of the tool, axially with respect to the tool axis, and a simultaneous rotational movement of the tool axis of the tool about a central axis which does not extend through the tool and is arranged parallel to the tool axis.

5. Tool according to one of the preceding claims, wherein:
a) in at least one, preferably every thread-producing region the effective profiles of thread-milling region(s) and thread-shaping region(s) are adapted to one another in such a way that
a1) at least one first subregion of the effective profile of the entire thread-producing region is formed exclusively by the effective profile of the or all thread-shaping region(s) and
a2) at least one second subregion of the effective profile of the entire thread-producing region is formed exclusively by the effective profile of the or all thread-milling region(s);
b) the effective profile of each thread-milling region or each thread-shaping region corresponds to the rotational projection of this thread-milling region or this thread-shaping region about the tool axis onto a projection plane extending through the tool axis.

6. Tool according to claim 5, wherein
a) there are provided, as the first subregion, formed by the effective profile of the or all thread-shaping region(s), of the effective profile of the entire thread-producing region, a central subregion and, as second subregions, formed by the effective profile of the or all thread-milling region(s), of the effective profile of the entire thread-producing region, two subregions adjoining both sides of the central subregion and/or
b) there are provided, as the second subregion, formed by the effective profile of the or all thread-milling region(s), of the effective profile of the entire thread-producing region, a central subregion and, as first subregions, formed by the effective profile of the or all thread-shaping region(s), of the effective profile of the entire thread-producing region, two subregions adjoining both sides of the central subregion and/or
c) subregions, adjoining the central subregion of the effective profile of the entire thread-producing region, of the effective profile of the entire thread-producing region adjoin the sides, facing away from the central subregion, of further subregions of the effective profile of the entire thread-producing region, which further subregions are formed by the effective profile of the or all thread-shaping region(s) or the or all thread-milling region(s).

7. Tool according to one of the preceding claims, wherein in at least one, preferably every thread-producing region a subregion of the effective profile of each thread-milling region lies within the effective profile of at least one thread-shaping region, preferably of each thread-shaping region, and a subregion of the effective profile of each thread-shaping region lies within the effective profile of at least one thread-milling region, preferably of each thread-milling region.

8. Tool according to one of the preceding claims, wherein at least two thread-producing regions are provided, which are arranged axially offset from one another with respect to the tool axis.

9. Tool according to one of the preceding claims, wherein at least one thread-shaping region comprises at least one shaping tooth, shaping wedge or pressure lug which projects radially outward and/or wherein at least one thread-shaping region in a cross section perpendicular to the tool axis has a shape derived from a part of a, preferably regular, polygon, the polygon having preferably a number of corners equal to two or three or four or five or six, corner regions of the at least approximately polygonal cross section of the thread-shaping region constituting shaping teeth, shaping wedges or pressure lugs, and/or wherein at least one thread-producing region comprises at least one ridge or a plurality of ridges which are arranged offset from one another in the direction of rotation and separated from one another by separation channels, said ridge(s) extending perpendicularly to the tool axis and being formed radially outwardly, there being formed on at least one or every ridge of at least one thread-producing region at least one shaping tooth, shaping wedge or pressure lug protruding radially further outward than the surrounding regions of the ridge, and/or a thread-milling region being formed, viewed in a predefined direction of rotation, at an end region of at least one or each ridge of at least one thread-producing region.

10. Tool according to one or more of the preceding claims, with at least one additional material-removing region in addition to the thread-milling region(s), at least one additional material-removing region being embodied and provided for producing a workpiece surface for the thread and at least one thread-producing region being embodied and provided for producing the thread in this workpiece surface and/or at least one additional material-removing region being embodied and provided for removing material in order to produce a preliminary thread in a workpiece surface and at least one thread-producing region being embodied and provided for finishing the thread by subsequent machining of the preliminary thread in the workpiece surface and/or at least one additional material-removing region being a drill region or a milling region or comprising at least one end-face cutting edge at an end face or a free end of the tool and/or at least one circumferential-side cutting edge at a circumferential region of the tool or wherein at least one additional material-removing region is embodied and provided for producing an entrance region or opening region of the thread that is enlarged, in particular stepped or chamfered, in comparison to a thread core.

11. Tool according to one of the preceding claims, with at least one additional thread-shaping region which operates without the removal of material, for the purpose of subsequent machining and/or levelling of the thread turns or thread flanks of the thread produced by the thread-producing region(s), in particular a first material-removing region comprising at least one preliminary working cutting edge for the removal of material, at least one thread-producing region adjoining the first material-removing region for producing a thread, a second material-removing region adjoining the at least one thread-producing region with at least one core cutter for the subsequent cutting or levelling of the thread core of the thread produced by the thread-producing region and an additional thread-shaping region adjoining the second material-removing region for the subsequent machining and/or levelling of the thread turns or thread flanks of the thread produced by the thread-producing region(s).

12. Method for producing a thread in a workpiece, wherein:
a) a tool according to one or more of the preceding claims
b) is moved in a working movement which comprises:
b1) a rotational movement of the tool about the tool axis in a predefined direction of rotation,
b2) a simultaneous movement of axial advancement of the tool, axially with respect to the tool axis and
b3) a simultaneous circular movement of the tool, wherein the tool axis of the tool rotates about a central axis of rotation extending parallel to the tool axis.

13. Method according to claim 12, wherein at least during a part of the working movement of the tool, at first at least one thread-shaping region produces a part of a thread turn in the workpiece by shaping and thus without the removal of material or recesses it further into the workpiece and subsequently at least one thread-milling region further machines, while removing material, the part of the thread turn that is produced or machined in the workpiece by the thread-shaping region and/or wherein the workpiece surface in the thread turn produced by at least one thread-producing region is partially milled and partially shaped and/or wherein a thread base of the thread turn in the workpiece is shaped by the at least one thread-shaping region and two thread flanks adjoining the thread base are at least partially milled by the at least one thread-milling region and/or wherein a thread base of the thread turn in the workpiece is milled by the at least one thread-milling region and two thread flanks adjoining the thread base are at least partially shaped by the at least one thread-shaping region.

14. Method according to claim 12 or claim 13, wherein during the working movement at least a number of thread revolutions corresponding to the number of thread-producing regions of the tool is produced using the tool.

## Revendications

1. Outil pour réaliser un filet (G) dans une pièce (50), comportant
a) au moins une zone de réalisation des filets (10 à 18), laquelle
a1) comporte au moins une zone de filetage par fraisage (2, 4) travaillant par enlèvement de copeaux, ainsi que
a2) au moins une zone de filetage par formage (1, 3) travaillant sans enlèvement de copeaux,
b) dans lequel outil au moins une zone de filetage par fraisage et au moins une zone de filetage par formage associée d'au moins une zone de réalisation des filets
b1) sont couplées ou reliées entre elles, de telle sorte qu'elles sont aptes à tourner ou tournent conjointement autour d'un axe (A) de l'outil et
b2) sont disposées de manière décalée l'une par rapport à l'autre le long d'un pourtour extérieur de la zone de réalisation des filets dans une direction de rotation (D) autour de l'axe (A) de l'outil, et/ou l'une derrière l'autre le long du pourtour extérieur de la zone de réalisation des filets dans une direction de rotation (D) autour de l'axe (A) de l'outil, ou successivement le long du pourtour extérieur de la zone de réalisation des filets dans une direction de rotation (D) autour de l'axe (A) de l'outil, et/ou
b3) sont agencées et réalisées de telle sorte que lors de la rotation autour de l'axe de l'outil dans un sens de rotation prédéfini, elles entrent en prise en alternance dans la pièce.

2. Outil selon la revendication 1, dans lequel
a) le profil actif de chaque zone de réalisation des filets est adapté ou correspond à un profil nominal prédéfini ou à un profil final prédéfini du filet à engendrer, ou peut être reproduit selon celui-ci,
b) le profil actif de chaque zone de réalisation des filets correspondant au profil de la projection de la rotation de toutes les zones de filetage par fraisage et de toutes les zones de filetage par formage de cette zone de réalisation des filets autour de l'axe de l'outil sur un plan de projection passant par l'axe de l'outil.

3. Outil selon la revendication 1 ou 2, dans lequel au moins une zone de réalisation des filets comporte plusieurs zones de filetage par fraisage et/ou plusieurs zones de filetage par formage, et les projections de la rotation d'au moins deux et, de préférence, de toutes ces zones de filetage par fraisage et/ou les projections de la rotation d'au moins deux et, de préférence, de toutes ces zones de filetage par formage autour de l'axe de l'outil sur un ou ledit plan de projection passant par l'axe de l'outil sont identiques les unes aux autres ou sont différentes les unes des autres.

4. Outil selon l'une quelconque des revendications précédentes, dans lequel, pendant un mouvement de travail de l'outil, qui englobe un mouvement de rotation de l'outil autour de l'axe de l'outil dans un sens de rotation prédéfini, un mouvement d'avance axial simultané de l'outil axialement par rapport à l'axe de l'outil et un mouvement de rotation simultané de l'axe de l'outil autour d'un axe central ne passant par l'outil et orienté parallèlement à l'axe de l'outil, la ou les zone(s) de filetage par fraisage et la ou les zone(s) de filetage par formage génèrent conjointement le profil du filet.

5. Outil selon l'une quelconque des revendications précédentes, dans lequel
a) dans au moins une, de préférence dans chaque zone de réalisation des filets, les profils actifs de la ou des zone(s) de filetage par fraisage et de la ou des zone(s) de filetage par formage sont ajustés les uns aux autres, de telle sorte que
a1) au moins une première zone partielle du profil actif de l'ensemble de la zone de réalisation des filets est formée exclusivement par le profil actif de la ou de toutes les zone(s) de filetage par formage, et
a2) au moins une deuxième zone partielle du profil actif de l'ensemble de la zone de réalisation des filets est formée exclusivement par le profil actif de la ou de toutes les zone(s) de filetage par fraisage,
b) le profil actif de chaque zone de filetage par fraisage ou de chaque zone de filetage par formage correspondant à la projection de la rotation de cette zone de filetage par fraisage ou de cette zone de filetage par formage autour de l'axe de l'outil sur un plan de projection passant par l'axe de l'outil.

6. Outil selon la revendication 5, dans lequel
a) il est prévu une zone partielle centrale pour former la première zone partielle, formée par le profil actif de la ou de toutes les zone(s) de filetage par formage, dans le profil actif de l'ensemble de la zone de réalisation des filets, et il est prévu deux zones partielles adjacentes aux deux côtés de la zone partielle centrale pour former les deuxièmes zones partielles, formées par le profil actif de la ou de toutes les zone(s) de filetage par fraisage, dans le profil actif de l'ensemble de la zone de réalisation des filets, et/ou
b) il est prévu une zone partielle centrale pour former la deuxième zone partielle, formée par le profil actif de la ou de toutes les zone(s) de filetage par fraisage, dans le profil actif de l'ensemble de la zone de réalisation des filets, et il est prévu deux zones partielles adjacentes aux deux côtés de la zone partielle centrale pour former les premières zones partielles, formées par le profil actif de la ou de toutes les zone(s) de filetage par formage, dans le profil actif de l'ensemble de la zone de réalisation des filets, et/ou
c) les zones partielles du profil actif de l'ensemble de la zone de réalisation des filets, adjacentes à la zone partielle centrale du profil actif de l'ensemble de la zone de réalisation des filets, sont situées dans le prolongement des autres zones partielles, sur les côtés détournés de la zone partielle centrale, du profil actif de l'ensemble de la zone de réalisation des filets, lesquelles sont formées par le profil actif de la ou de toutes les zone(s) de filetage par formage ou de la ou de toutes les zone(s) de filetage par fraisage.

7. Outil selon l'une quelconque des revendications précédentes, dans lequel, dans au moins une, de préférence dans chaque zone de réalisation des filets, une zone partielle du profil actif de chaque zone de filetage par fraisage est située à l'intérieur du profil actif d'au moins une zone de filetage par formage, de préférence de chaque zone de filetage par formage, et une zone partielle du profil actif de chaque zone de filetage par formage est située à l'intérieur du profil actif d'au moins une zone de filetage par fraisage, de préférence de chaque zone de filetage par fraisage.

8. Outil selon l'une quelconque des revendications précédentes, dans lequel il est prévu au moins deux zones de réalisation des filets, qui sont disposées en étant décalées l'une par rapport à l'autre dans la direction axiale par rapport à l'axe de l'outil.

9. Outil selon l'une quelconque des revendications précédentes, dans lequel au moins une zone de filetage par formage comporte au moins une dent de formage, une cale de formage ou des cannelures de pression s'avançant en saillie radiale vers l'extérieur, et/ou dans lequel au moins une zone de filetage par formage dans une section perpendiculaire à l'axe de l'outil a une forme dérivée d'une partie d'un polygone, de préférence régulier, ledit polygone ayant de préférence deux ou trois ou quatre ou cinq ou six angles, sachant que les zones d'angle de la section au moins sensiblement polygonale de la zone de filetage par formage forment des dents de formage, des cales de formage ou des cannelures de pression, et/ou dans lequel au moins une zone de réalisation des filets comporte au moins un sillon ou plusieurs sillons disposés de manière décalée les uns par rapport aux autres dans la direction de rotation et séparés les unes des autres par des rainures de séparation, qui est ou sont réalisés en saillie radiale vers l'extérieur perpendiculairement à l'axe de l'outil, sachant que sur au moins un ou sur chaque sillon d'au moins une zone de réalisation des filets est réalisée respectivement au moins une dent de formage, une cale de formage ou une cannelure de pression, qui s'avance en saillie radiale davantage vers l'extérieur que les zones environnantes du sillon, et/ou une zone de filetage par fraisage étant réalisée dans une zone d'extrémité, par référence à une direction de rotation prédéfinie, d'au moins un sillon ou de chaque sillon d'au moins une zone de réalisation des filets.

10. Outil selon une ou plusieurs des revendications précédentes, comportant au moins une zone d'enlèvement de copeaux supplémentaire, en plus de la ou des zone(s) de filetage par fraisage, sachant qu'au moins une zone d'enlèvement de copeaux supplémentaire est réalisée ou prévue pour générer une surface d'une pièce pour le filet, et au moins une zone de réalisation des filets est réalisée ou prévue pour réaliser le filet dans cette surface d'une pièce, et/ou sachant qu'au moins une zone d'enlèvement de copeaux supplémentaire est réalisée ou prévue pour usiner par enlèvement de copeaux une ébauche de filet dans une surface d'une pièce et au moins une zone de réalisation des filets est réalisée et prévue pour la finition du filet dans la surface d'une pièce par rectification de l'ébauche de filet, et/ou sachant qu'au moins une zone d'enlèvement de copeaux supplémentaire est une zone de perçage ou une zone de fraisage ou comporte au moins un taillant frontal sur une face frontale ou sur une extrémité libre de l'outil et/ou au moins un taillant périphérique sur une zone périphérique de l'outil, ou dans lequel au moins une zone d'enlèvement de copeaux supplémentaire est réalisée et prévue pour générer une zone d'entrée ou zone d'embouchure du filet, agrandie, en particulier étagée ou chanfreinée, en particulier par rapport à un fond de filet.

11. Outil selon l'une quelconque des revendications précédentes, comportant au moins une zone de filetage par formage supplémentaire travaillant sans enlèvement de copeaux, destinée à la rectification et/ou à l'égalisation des pas de vis ou des flancs du filet réalisé par la ou les zones de réalisation des filets, sachant qu'en particulier une première zone d'enlèvement de copeaux comporte au moins un taillant de dégrossissage destiné à l'enlèvement de la matière, au moins une zone de réalisation des filets destinée à réaliser un filet est adjacente à la première zone d'enlèvement de copeaux, une deuxième zone d'enlèvement de copeaux est adjacente à ladite au moins une zone de réalisation des filets, comportant au moins un taillant pour la rectification ou l'égalisation du fond de filet réalisé par la zone de réalisation des filets, et une zone de filetage par formage supplémentaire est adjacente à la deuxième zone d'enlèvement de copeaux et est destinée à la rectification et/ou à l'égalisation des pas de vis ou des flancs du filet généré par la ou les zone(s) à réaliser les filets.

12. Procédé de réalisation d'un filet dans une pièce, dans lequel
a) un outil selon une ou plusieurs des revendications précédentes
b) est déplacé dans un mouvement de travail, qui englobe
b1) un mouvement de rotation de l'outil autour de l'axe de l'outil dans un sens de rotation prédéfini,
b2) un mouvement d'avance axial simultané de l'outil axialement par rapport à l'axe de l'outil et
b3) un mouvement circulaire simultané de l'outil, au cours duquel l'axe de l'outil tourne autour d'un axe de rotation central parallèle à l'axe de l'outil.

13. Procédé selon la revendication 12, dans lequel, au moins pendant une partie du mouvement de travail de l'outil, au moins une zone de filetage par formage génère ou continue à engendrer dans la pièce, par formage et donc sans enlèvement de copeaux, une partie d'un pas de vis dans la pièce et, ensuite, au moins une zone de filetage par fraisage continue à usiner par enlèvement de copeaux la partie du pas de vis réalisée ou formée par la zone de filetage par formage dans la pièce, et/ou dans lequel la surface de la pièce, dans laquelle un pas de vis est partiellement fraisé ou partiellement formé par au moins une zone de réalisation des filets, et/ou dans laquelle un fond du pas de vis dans la pièce est formé par ladite au moins une zone de filetage par formage, et deux flancs adjacents au fond du pas de vis sont fraisés au moins partiellement par ladite au moins une zone de filetage par fraisage, et/ou dans lequel un fond du pas de vis dans la pièce est fraisé par ladite au moins une zone de filetage par fraisage et deux flancs adjacents au fond du pas de vis sont formés au moins partiellement par ladite au moins une zone de filetage par formage.

14. Procédé selon la revendication 12 ou 13, dans lequel au moins un nombre de tours de pas de vis, correspondant au nombre de zones de réalisation des filets de l'outil, est généré avec l'outil pendant le mouvement de travail.
